# EUROPEAN PATENT SPECIFICATION

(11) **EP 3 756 952 B1**
(45) Date of publication and mention of the grant of the patent: **12.02.2025**
(21) Application number: 19183140.3
(22) Date of filing: 28.06.2019
(51) Int. Cl.: B60R 3/02, B60D 1/58

(54) **STEP ASSEMBLY FOR SECURING A SUPPORT PLATFORM TO A VEHICLE**
STUFENANORDNUNG ZUR BEFESTIGUNG EINER TRÄGERPLATTFORM AN EINEM FAHRZEUG
ENSEMBLE MARCHEPIED POUR LA FIXATION D'UNE PLATE-FORME DE SUPPORT À UN VÉHICULE

(43) Date of publication of application: 30.12.2020
(73) Proprietor: Ford Global Technologies, LLC, Dearborn, MI 48126 (US)
(72) Inventor: Ülker, Aytug, 41275 Yeniköy/Kocaeli (TR); Sahin, Gökhan, 41100 Izmit/Kocaeli (TR); Colak, Sadiye, 34325 Avcilar/Istanbul (TR); Sögütcü, Ceyhun, 41900 Derince/Kocaeli (TR); Atasoy, Mehmet Akif, 34672 Üsküdar/Istanbul (TR); Haci, Merve, 41050 Izmit/Kocaeli (TR); Olgun, Yildiray, 41950 Degirmendere/Gölcuk/Kocaeli (TR)
(74) Representative: Dörfler, Thomas

(56) References cited:
- US-A1- 2004 217 573
- US-A1- 2005 146 112
- US-A1- 2015 314 733

## Description

The present invention relates in general to a step assembly mountable to a vehicle. More in particular, the present invention relates to a step assembly mountable to a trailer hitch or a tow bar or a tow hitch and that provides a support platform with a configurable position relative to the vehicle.

It is known in the art to provide a "step assembly" or a "step assist" to commercial vehicles (e.g. a van) in order to ease access to the vehicle roof, and/or to allow a person to more easily enter or leave the vehicle, especially if the vehicle has a high ground clearance. Some of these step assemblies are fixedly mounted to a rear end of the vehicle (e.g. by means of bolts) and their position is not adjustable. Other assemblies have the problem that the step assembly, or at least a portion thereof (e.g. a central portion), needs to be removed before a trailer can be connected to the vehicle, which is inconvenient.

US 2005 / 146 112 A1 discloses a stowable step for use with a vehicle, having a trailer hitch receptacle, comprising: a horizontally adjustable securement means selectively received in the trailer hitch receptacle; a vertical sleeve means secured to and extending upwardly from the securement means, said sleeve means being vertically adjustable; control means co-axial with the sleeve means, telescopically and rotatably received within said sleeve means, said control means terminating at its lower end in a step means movable, while in a substantially constant horizontal plane, in conjunction with said control means, from a stowed position beneath the vehicle to a utility position extending outwardly from the vehicle, and at its upper end a control handle which allows single handed operation, including unlatching the control means allowing rotation thereof and rotating the control means and its attached step from the stowed to the utility position; and means to latch the step in its stowed and in its latched position.

US 2015 / 314 733 A1 discloses a stable, selectively extending platform for use with a motor vehicle, comprising: a first section to be removably attached to a vehicle; an elongated second section including a first end pivotably secured to the first section, said second section selectively locked in two positions, one extending outwardly from the vehicle and one beneath the vehicle; and a third section including the platform pivotably secured to a second end of the second section and selectively locked in two positions, one extending beyond the second end of the second section, whereby the platform is movable to and lockable in two positions, extending outwardly from the vehicle or stored beneath the vehicle.

US 2004 / 217 573 A1 discloses a rotatable step to assist a person entering into a vehicle or climbing onto a machine comprising: a step with a nonskid tread large enough to hold both feet at once; a step support having two legs attached to one another forming an included angle of less than 180 degrees, with the ability to accept the step for either left or right hand use at one end of the step support, and rotatably secured to the opposite end of the step support; a locking plate having a center hole in which a pivot device may rotate, and with the ability to positively lock the step in it's several positions, and is fastened to the step support at the rotatable position; a pivot device; a pivot bar with the pivot device secured at one end, and fastened to the vehicle or machine at the opposite end.

WO 2017 / 085 485 A1 describes a vehicle step system with a mounting bracket and a support platform, and a method of securing the same.

GB 2 530 657 A describes a step assembly including a base frame mountable to the rear of a vehicle such as a van.

US 2001 / 0 045 720 A1 describes a foldable step assembly that is adjustably engageable with a trailer hitch.

US 2008 / 0 042 394 A1 provides a retractable vehicle step for use in allowing a user to access a vehicle.

US 2008 / 0 100 024 A1 describes a retractable vehicle step attachable to a rear portion of a vehicle or truck.

US 2009 / 0 079 157 A1 describes a vehicle-mounted step.

DE 10 2004 030 359 A1 describes a step arrangement for a lorry comprising an adjustable axis.

US 5 884 930 A describes a dual receiver hitch with top winch plate.

US 6 682 086 B1 describes a step platform assembly for attachment to a vehicle hitch assembly. The platform assembly includes a planar step platform member rigidly fastened to a coplanar linear step support member.

US 7 661 693 B1 describes a combined vehicle tow and step assembly in which a trailer hitch and step platform are interconnected with each other and function as a unit so as to provide both towing and step functions without the need of removal from the vehicle high mount to achieve such functions.

US 2003 / 0 094 472 A1 describes a step or platform adapted to be mounted to the receiver of a trailer hitch selectively movable from a stowed to a deployed position without vertical movement, said platform is automatically locked in its selected position and includes a safety mechanism preventing inadvertent movement.

US 7 204 501 B2 describes a universal retractable step for use with the trailer hitch receptacle on automotive vehicles, wherein the step is movable from a stowed position to a utility position while remaining in the same horizontal plane.

US 2008 / 0 067 775 A1 describes a step for a large pickup truck attachable to the side of a receiver type hitch.

CN 105 946 726 A describes a vehicle side stepping bar.

US 7 490 889 B1 describes a trailer hitch step for vehicles having a tailgate.

US 7 185 904 B1 describes an auxiliary step for facilitating entering and exiting the bed of a pickup truck.

US 4 620 609 A describes a removable bumper step for vehicles comprising a rigid plate having an upper, generally planar foot supporting surface terminating in a front end.

US 7 900 944 B2 describes a retractable vehicle step assembly including a mounting bracket attached to a motor vehicle.

US 5 513 866 A describes a retractable step including a first and second tube member, a step platform and a retraction device.

JP H07-13596 U describes a vehicle step which is provided to lower an entrance and exit of a vehicle and which functions as a stepping-stone when getting on and off the vehicle.

There is always room for improvements or alternatives.

The present invention has the object to provide a step assembly with a support platform mountable to a vehicle, which does not have to be removed when a trailer is connected to the vehicle, and which allows the position of the support platform to be adjusted in three directions.

It is also an object of the present invention to provide a kit of parts for building such a step assembly.

These objects are achieved by a step assembly having the features of claim 1, and by a kit of parts having the features of claim 7. Further, particularly advantageous embodiments of the invention are disclosed in the dependent claims.

It should be noted that the individual features listed in the description below could be combined in any technically meaningful way with each other and show further embodiments of the invention. The description of the invention is additionally characterized and specified particularly in connection with the figures.

The present invention discloses a step assembly for removably securing a support platform to a vehicle, comprising: a support system mountable to a trailer hitch or tow bar or tow hitch; a support platform connected with said support system via a plurality of positioning mechanisms comprising: a first positioning mechanism configured for selectively securing and adjusting a height position of the support platform relative to the vehicle; and a second positioning mechanism configured for selectively securing and adjusting a transverse position of the support platform relative to the vehicle; and a third positioning mechanism configured for selectively securing and adjusting a longitudinal position of the support platform relative to the vehicle. The first positioning mechanism itself comprises two subsystems, an up-down displacement mechanism with head and an up-down displacement mechanism with buttons. According to the invention, the up-down displacement mechanism with buttons comprises a hight adjuster pipe support, springs, half bushes, setscrews, a timing shaft and a pipe adapter. The support system may be located at one end (e.g. proximal end) of the step assembly, and the support platform may be located at the other end (e.g. distal end) of the step assembly, and the first, second and third positioning mechanism may be operatively connected between said ends.

It is an advantage of this step assembly that it does not need to be removed when connecting a trailer, thus saving time (of dismounting and remounting), and avoiding that parts of the step assembly need to be temporarily stowed, or may even get lost.

It is a further advantage of this step assembly that the support platform does not need to be rotated to a vertical position, but remains in a horizontal position at all times.

It is a further advantage of this step assembly that the first, second and third position can be chosen independently.

According to a further advantageous embodiment of the present invention, the mounting system comprises a mounting bracket with at least two holes for allowing passage of bolts.

**It** is an advantage that the mounting bracket can be removed from the vehicle without damaging the vehicle, should that be necessary.

According to a further advantageous embodiment of the present invention, the first positioning mechanism is configured to secure the support platform at a height position selected from a limited group of discrete height positions, e.g. corresponding to a first height position at the same height as the tow bar, a second height position at a floor level of the vehicle, and a third height position below the tow bar.

According to a further advantageous embodiment of the present invention, the second positioning mechanism is configured to secure the support platform at a lateral or transverse position selected from a limited group of discrete transverse positions, e.g. corresponding to a left lateral position substantially aligned with a left side of the vehicle, and a central lateral position substantially aligned with a central position of a rear door, and optionally one or more intermediate lateral positions.

According to a further advantageous embodiment of the present invention, the third positioning mechanism is configured to secure the support platform at a longitudinal position selected from a limited group of discrete longitudinal positions, e.g. corresponding to a frontward position, and a backward position in regard to the vehicle.

According to a further advantageous embodiment of the present invention, the second positioning mechanism comprises a first tubular pipe and a first elongated element arranged inside the first tubular pipe, and a second tubular pipe and a second elongated element movably arranged inside the second tubular pipe, and a third tubular pipe and a third elongated element with a travel shaft portion arranged inside the third tubular pipe, and a fourth tubular pipe and a fourth elongated element with a travel shaft portion arranged inside the fourth tubular pipe.

According to a further advantageous embodiment of the present invention, the third positioning mechanism comprises a pair of two spaced-apart guiding mechanisms, each guiding mechanism comprising a lower guide rail and an upper guide rail slidably arranged thereto. The guiding mechanisms may be oriented substantially horizontally, when the assembly is mounted to the vehicle.

According to another advantageous embodiment of the present invention, the present invention discloses a kit of parts, comprising: the support system, the support platform, the first positioning mechanism, the second positioning mechanism, and the third positioning mechanism.

The mounting bracket is used between the pipe support and the tow bar which are to be connected to the side surface of the tow bar. The pipe support, is placed onto the mounting bracket, has a slot in right in order to allow the inner sliding pin and the moving pipe support to direct sliding on its inner surface easily. While the special rotary shaft head rotating in the pipe support, the special rotary shaft head and the special rotary shaft are pressed on the ball-bearing in the pipe support. The ball-bearings used help reduction the friction. As a result of the special rotary shaft rotating, the moving pipe support enables the linear movement along the slot in the pipe support. The pipe holder, is placed into the moving pipe support, has the hole in order to allow the carrier bolt sliding on its inner surface easily. While the moving pipe support sliding on the pipe holder, the tension spring that used between the inner sliding pin and the pipe holder is pressed sliding the carrier bolt down. When the carrier bolt is moved up by the spring force, the inner sliding pin is placed into the slot on the moving pipe support. Thus, system gets locked, therefore the linear movement of the step platform is not allowed. If desired, up-down displacement system with head can be adjusted the up and down movement of the step platform by turning the special rotary shaft head to the right and left. Firstly, adjustment of the height adjuster pipe support is done with the timing shaft button. The half bush that has the threaded hole is used between the height adjuster pipe support and the moving pipe support which are to be connected. The setscrews are prevented from leaving the place where the height adjuster pipe support and the moving pipe support are inserted. In this case the system is locked with inner and outer slots by contacting between the timing shaft and the height adjuster pipe support, the timing shaft and the moving pipe support. The timing shaft, is placed into the height adjuster pipe support and the moving pipe support, has the slots in order to allow the height adjuster pipe support and the moving pipe support sliding on its outer surface easily. While the timing shaft sliding in the moving pipe support, the height adjuster pipe support and the half bush, the timing shaft button is pressed pushing the spring left. When the timing shaft reaches the height adjuster pipe support until the centring groove where it is located on the height adjuster pipe support, it is moved up by the spring force and placed into the inner groove. Thus, the system gets unlocked, therefore radial rotation movement of the height adjuster pipe support that turns 72 degrees is allowed. If desired, the system can be easily locked by stop pushing the locking button of the timing shaft. Finally, adjustment of the pipe adapter is done with the timing shaft button. The half bush that has the threaded hole is used between the height adjuster pipe support and the pipe adapter which are to be connected. The setscrews are prevented from leaving the place where the height adjuster pipe support and the pipe adapter are inserted. In this case the system is locked with inner and outer slots by contacting between the timing shaft and the height adjuster pipe support, the timing shaft and the pipe adapter. The timing shaft, is placed into the height adjuster pipe support and the pipe adapter, has the slots in order to allow the height adjuster pipe support and the pipe adapter sliding on its outer surface easily. The timing shaft button is pressed pushing the spring right while the timing shaft sliding in the pipe adapter and the height adjuster pipe support. When the timing shaft reaches the inner grove where it is located on the pipe adapter, it is moved up by the spring force and placed into the inner hole. Thus, the system gets unlocked, therefore radial rotation movement of the pipe adapter that turns 72 degrees is allowed. If desired, the system can be easily locked by stop pushing the timing shaft button. The locking button is used between the pipe adapter and the linear guided pipe receiver which are to be connected. The locking button, is placed onto the button positioner spring, has protrusions in upper and inner in order to allow the linear guided pipe receiver sliding on its surface easily. While the linear guided pipe receiver sliding on the locking button, the locking button is pressed pushing the button positioner springs down. When the locking button reaches the linear guided pipe receiver slots where they are located on the linear guided pipe receiver, it is moved up by the button positioner spring force and placed onto the protrusions. Thus, the system gets unlocked, therefore the linear movement of the linear guided pipe receiver is allowed. If desired, the system can be locked by stop pushing the locking button. The pull handle that fitted with the spring and the special nut inside of adjustable handle has protrusions in upper in order to allow the lower linear guide rail sliding on its surface easily. While the special nut sliding in the adjustable handle, the special nut is pressed pushing the spring down. When the special nut reaches the adjustable handle hole where it is located on the upper linear guide rail, it is moved up by the spring force and placed into the hole. Thus, the system gets unlocked, therefore the linear movement of the upper and the lower linear guide rail is allowed. If desired, the system can be locked by stop pushing the pull handle. The ball-bearings are specially used as to prevent the friction created by the linear movement that occurs between the linear guided pipe receiver and the lower linear guide rail. The lower linear guide rail has chamfered holes to centre the ball-bearings on it. It prevents the ball-bearing from coming out of its place and guides the linear movement of the linear guided pipe receiver. The adjustable handle that attached to the linear guided pipe receiver compress the upper linear guide rail to not move. If desired, the system can be loosened to facilitate the linear movement. As a result, the adjustable step can be easily adjusted to move step by step up and down, right and left and forward and backward by means of the systems.

Further features and advantages of the present invention will become apparent from the following description of a non-limiting embodiment of the invention which will be explained below with reference to the drawing, wherein:
- FIG. 1A: shows an exploded view of an exemplary step assembly according to an embodiment of the present invention, with an indication of several subsystems or displacement mechanisms.
- FIG. 1B: is a copy of FIG. 1A, without the indication of the subsystems.
- FIG. 1C: shows a schematic high-level view of the subsystems of the step assembly according to embodiments of the present invention.
- FIG. 2 to FIG. 6: show the step assembly of FIG. 1 mounted to the rear of a vehicle, in a first exemplary 3D position relative to the vehicle ("backwards" in longitudinal direction L of the vehicle, "up" in height direction H of the vehicle, and "right" in transverse direction T of the vehicle).

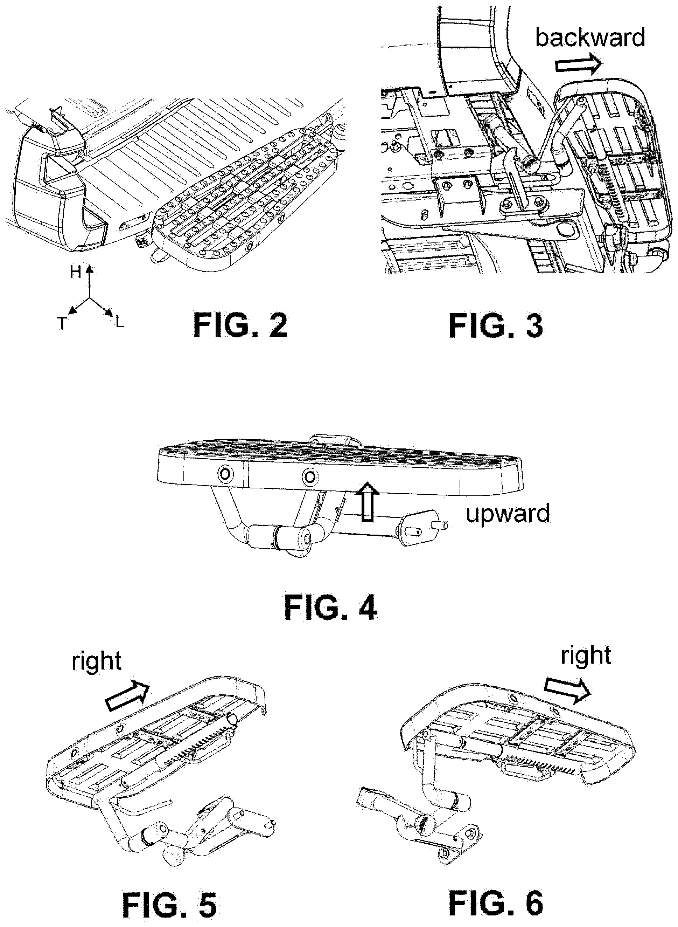

- FIG. 2: shows a perspective view (seen from above) of the step assembly showing the support platform at substantially the same height as a floor of the vehicle.
- FIG. 3: shows a perspective view (seen from below) of the step assembly showing its backward position.
- FIG. 4: shows a perspective view (seen from behind) of the step assembly showing its upward position.
- FIG. 5, FIG.: 6 each show perspective views (seen from below) of the step assembly to better illustrate its lateral positon (shifted to its rightmost position, corresponding to a central position with respect to the vehicle).

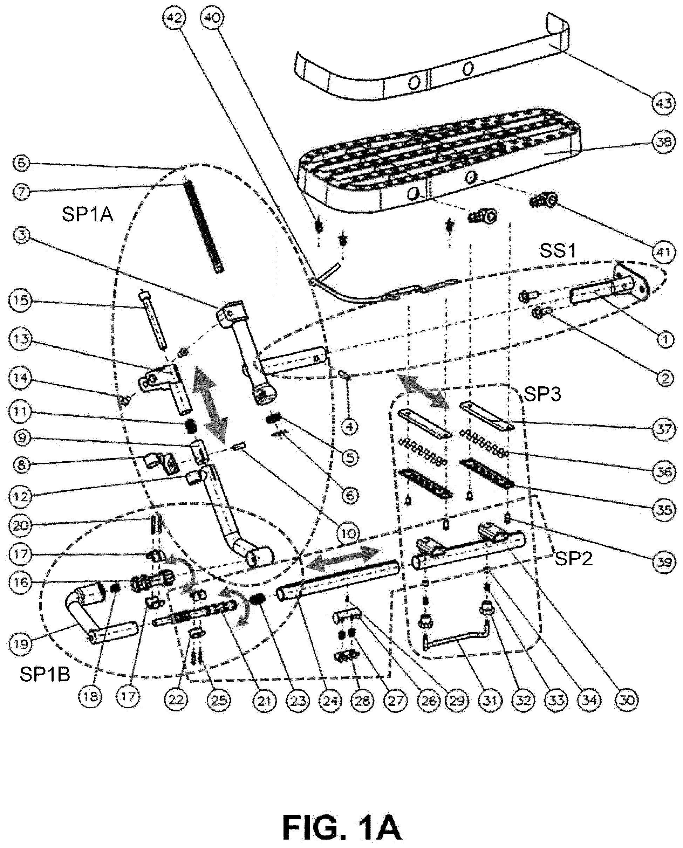

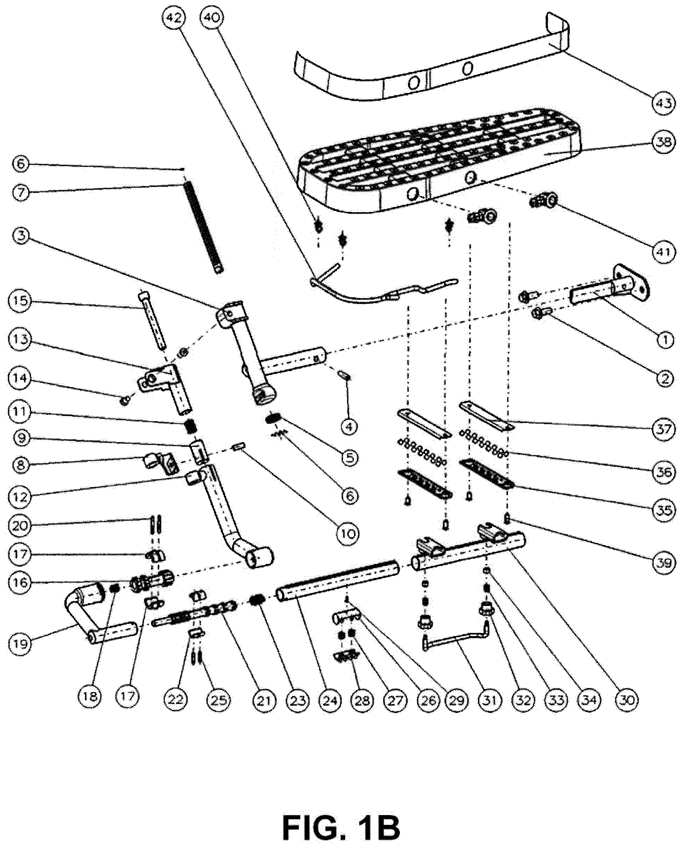

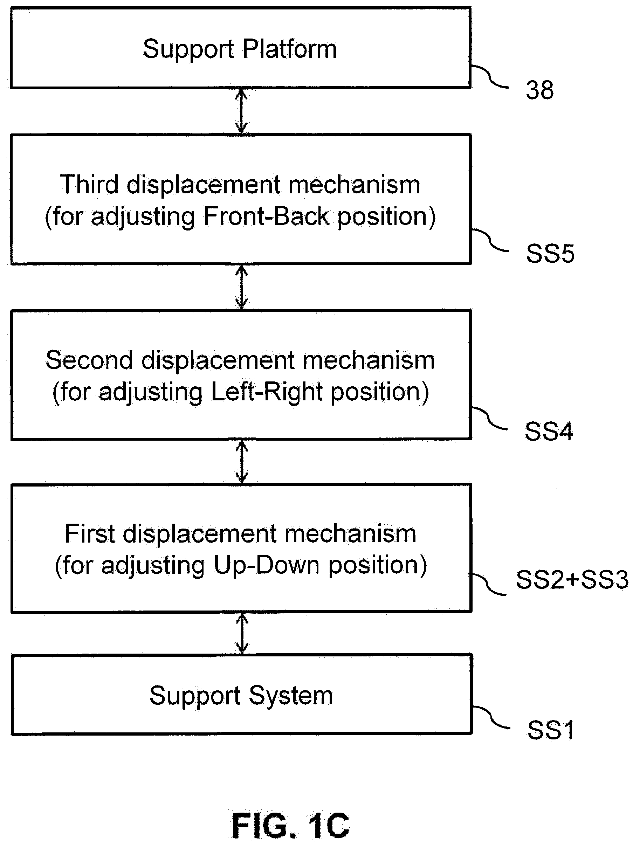

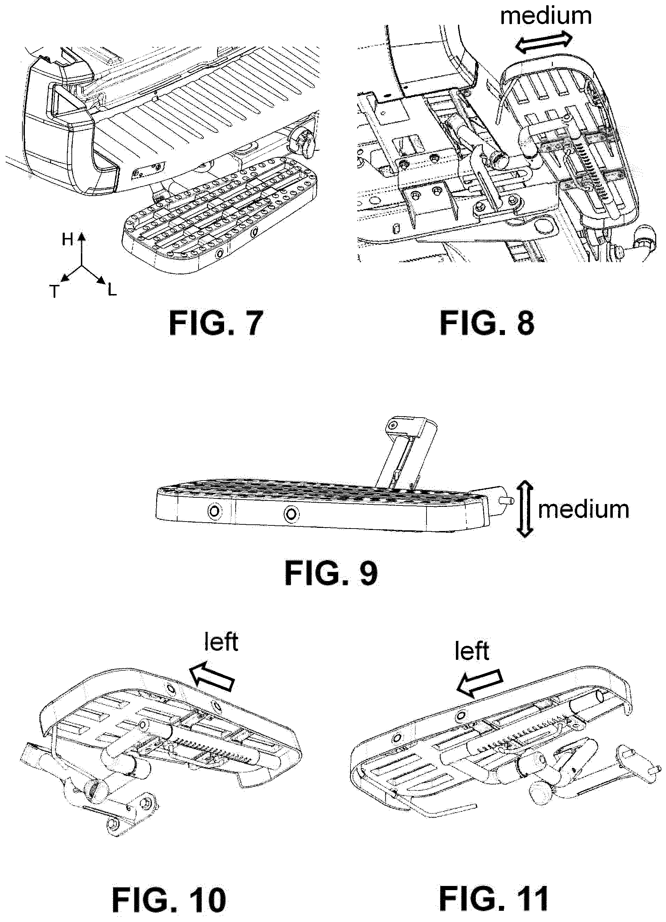

- FIG. 7 to FIG. 11: show the step assembly of FIG. 1 mounted to the rear of a vehicle, in a second exemplary 3D position relative to the vehicle ("medium" in longitudinal direction L, "medium" in height direction H, and "left" in transverse direction T).
- FIG. 7: shows a perspective view (seen from above) of the step assembly showing the support platform at a height position slightly lower than a floor of the vehicle.
- FIG. 8: shows a perspective view (seen from below) of the step assembly showing its medium position in longitudinal direction.
- FIG. 9: shows a perspective view (seen from behind) of the step assembly showing its medium height position.
- FIG. 10, FIG. 11: each show perspective views (seen from below) of the step assembly to better illustrate its lateral positon (shifted to its leftmost position, corresponding to a laterally outward position with respect to the vehicle).

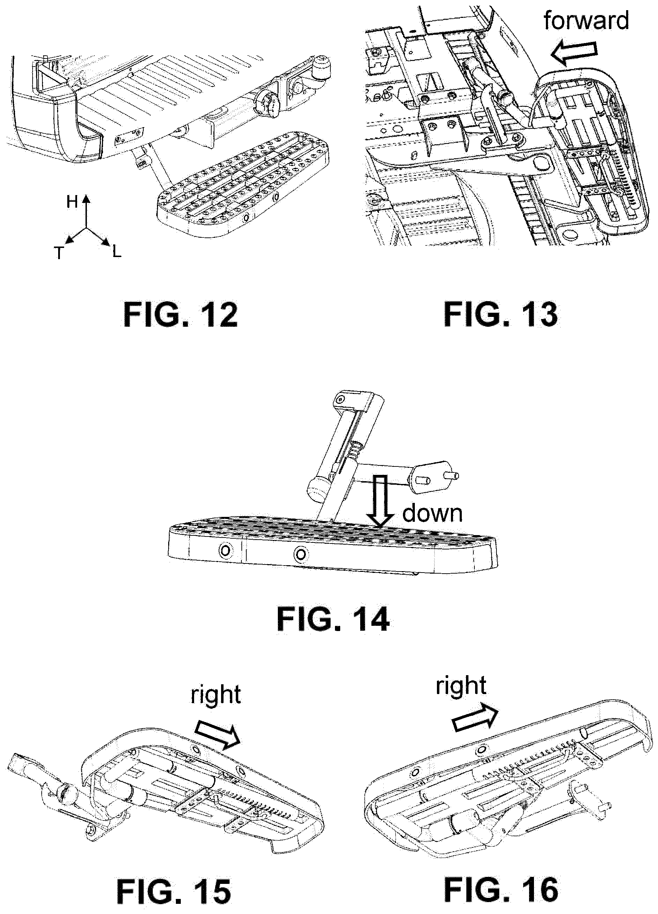

- FIG. 12 to FIG. 16: show the step assembly of FIG. 1 mounted to the rear of a vehicle, in a third exemplary 3D position relative to the vehicle ("forward" in longitudinal direction L, "down" in height direction H, and "right" in transverse direction T).
- FIG. 12: shows a perspective view (seen from above) of the step assembly showing the support platform at a height position considerably lower than a floor of the vehicle.
- FIG. 13: shows a perspective view (seen from below) of the step assembly showing its forward position in longitudinal direction.
- FIG. 14: shows a perspective view (seen from behind) of the step assembly showing its downward height position.
- FIG. 15, FIG.: 16 each show perspective views (seen from below) of the step assembly to better illustrate its lateral positon (shifted to its rightmost position, corresponding to a laterally central position with respect to the vehicle).

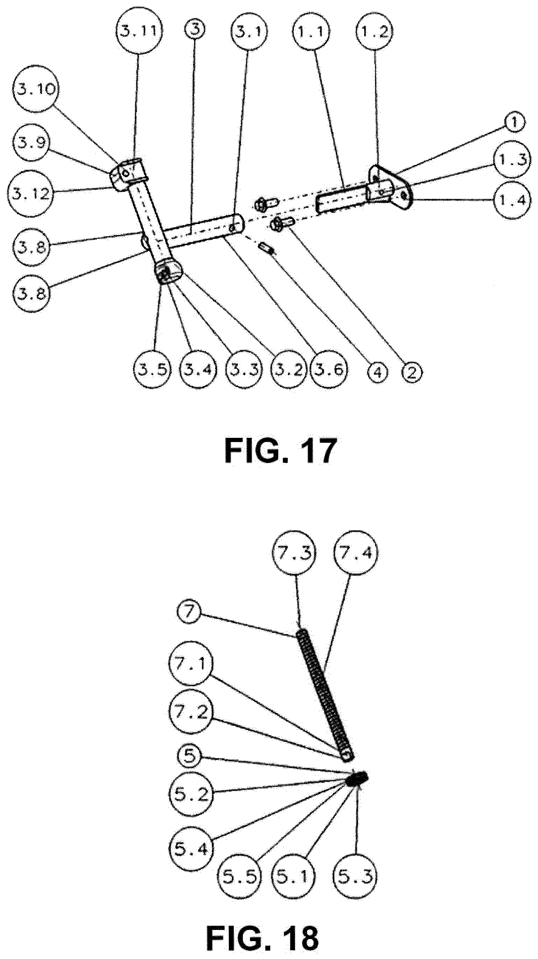

- FIG. 17, FIG.: 18 each show an exploded view of a subsystem of the step assembly of FIG. 1, referred to herein as the "support system".

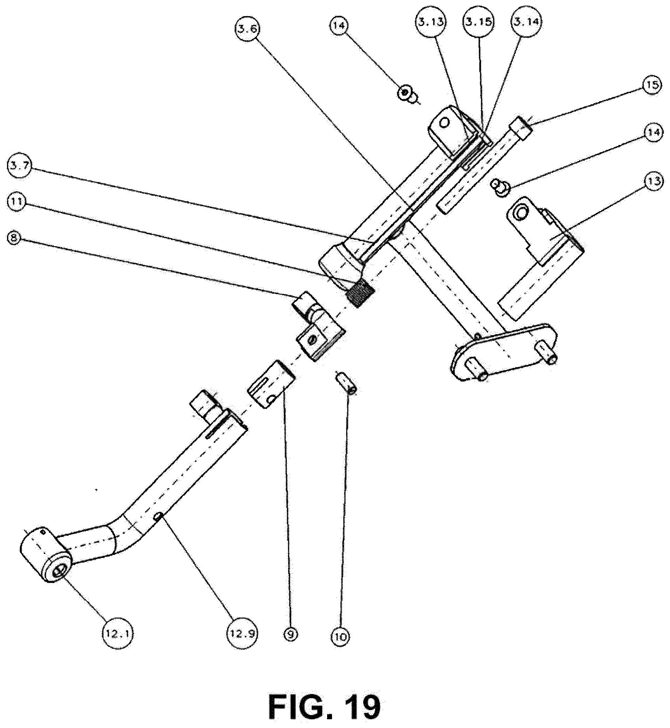

- FIG. 19: illustrates parts of the "first positioning mechanism" also referred to herein as "up-down displacement system". The parts shown in FIG. 19 are referred to as "up-down displacement system with head", as can be used in the step assembly of FIG. 1A.

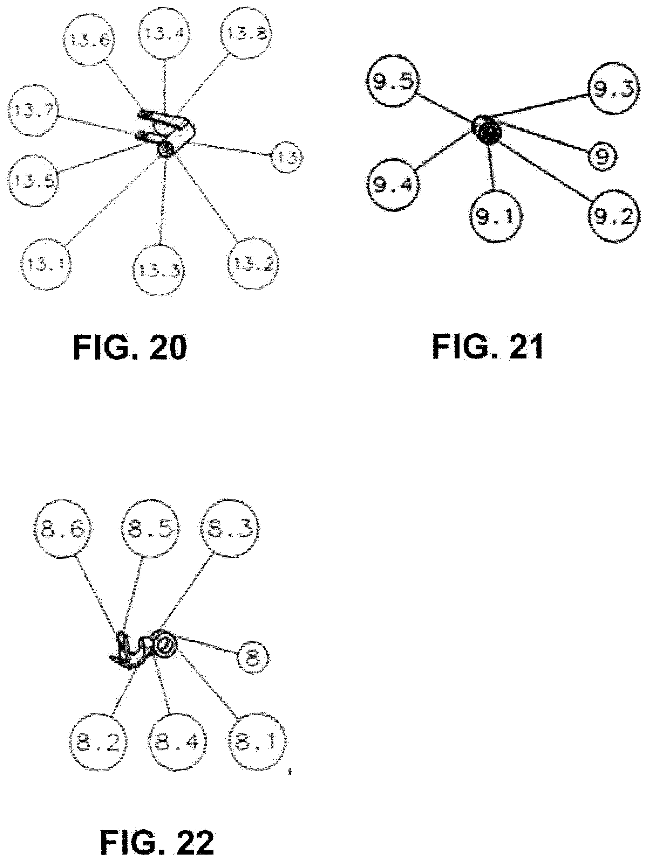

- FIG. 20 to FIG. 22: show parts of the mechanism shown in FIG. 19 in more detail.

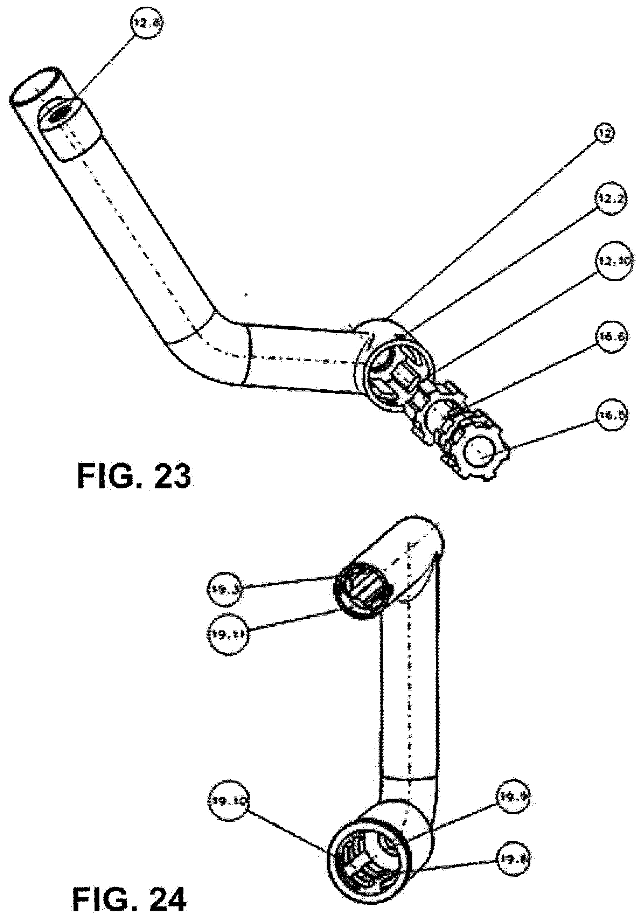

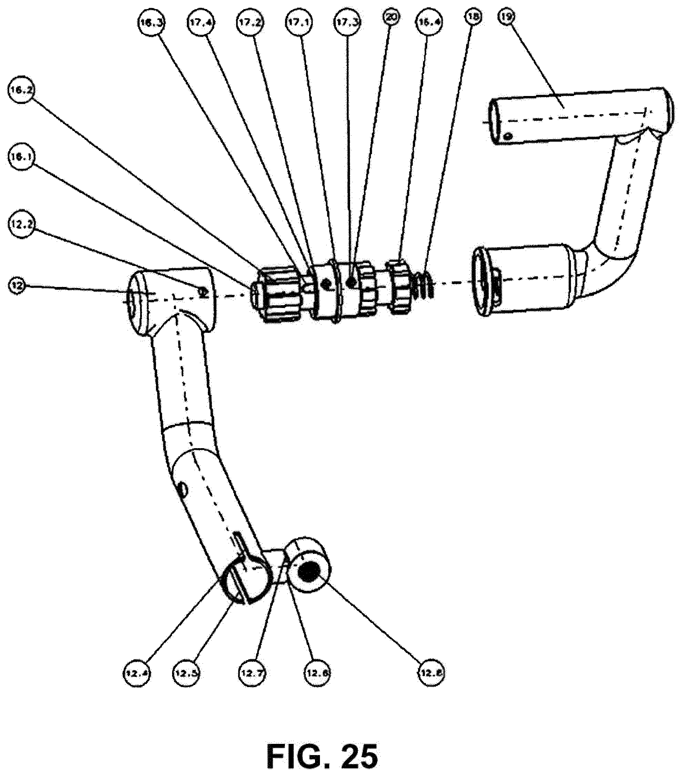

- FIG. 23 to FIG. 25: illustrate another part of the "first positioning mechanism".

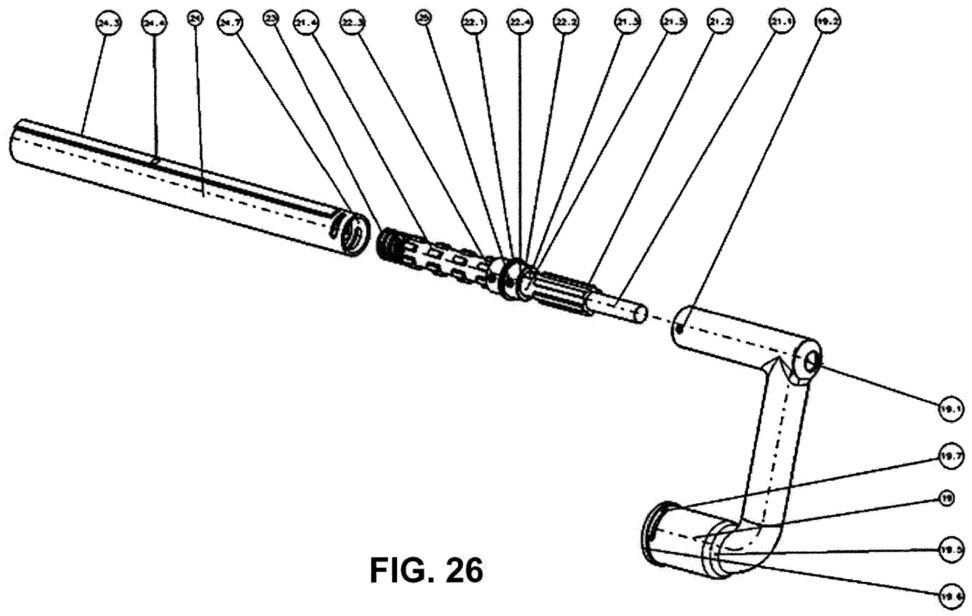

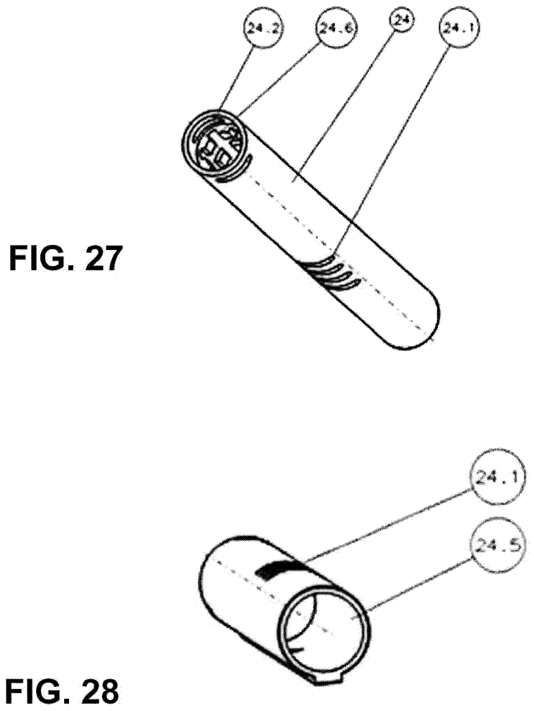

- FIG. 26 to FIG. 28: illustrate another part of the "first positioning mechanism".

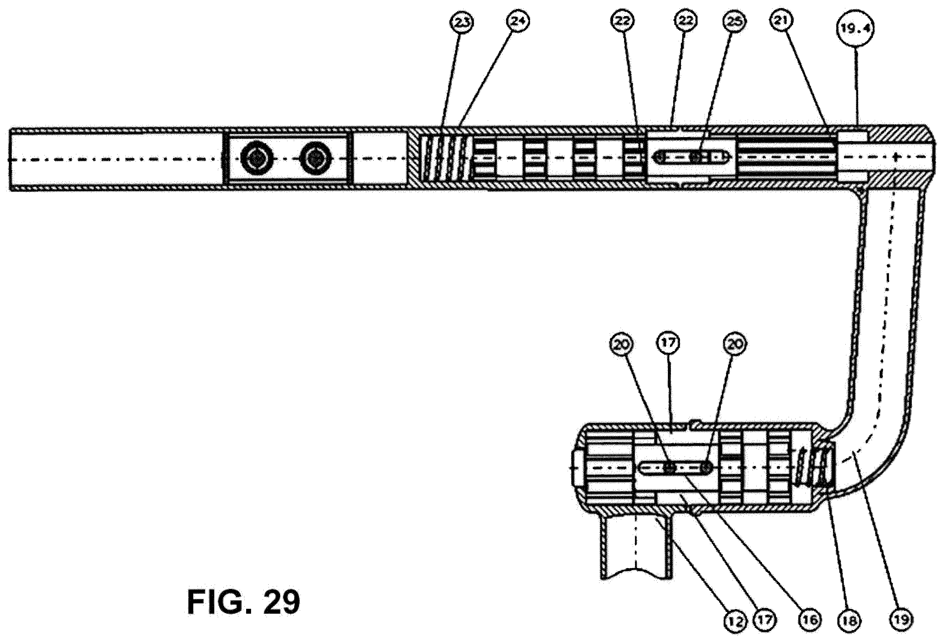

- FIG. 29: shows a cross-sectional side view of the "up-down displacement system with buttons" in a locked configuration.

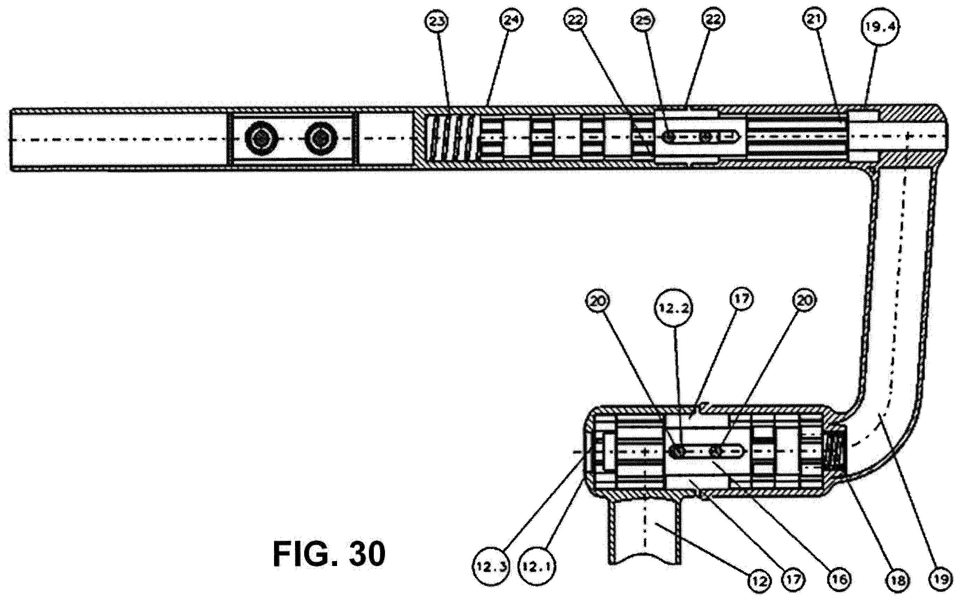

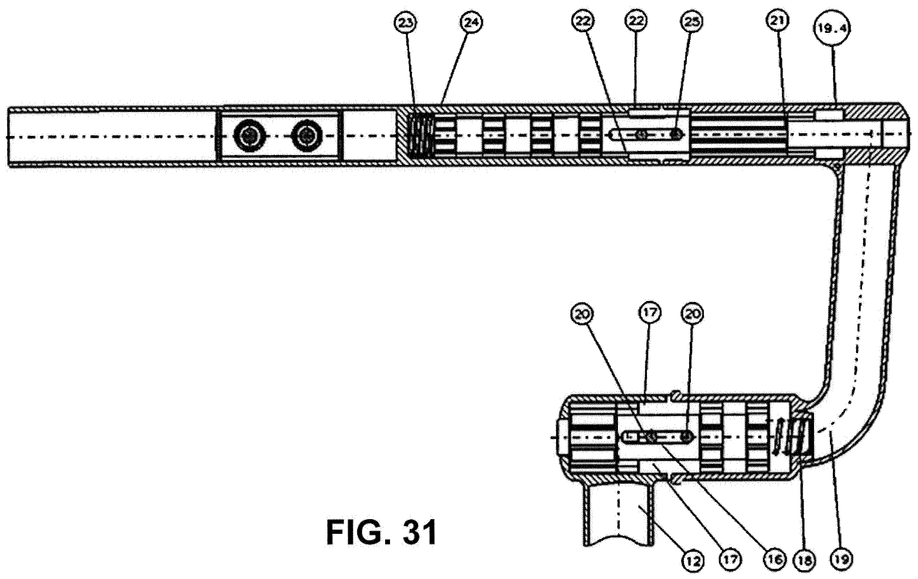

- FIG. 30, FIG. 31: each show a cross-sectional side view of the "up-down displacement system with buttons" in an unlocked configuration.

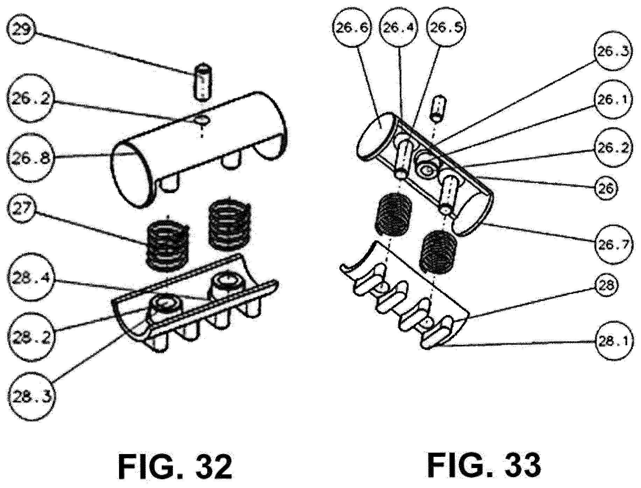

- FIG. 32, FIG. 33: each illustrate the "second positioning mechanism", also referred to herein as "left-right displacement system", as can be used in the step assembly of FIG. 1A.

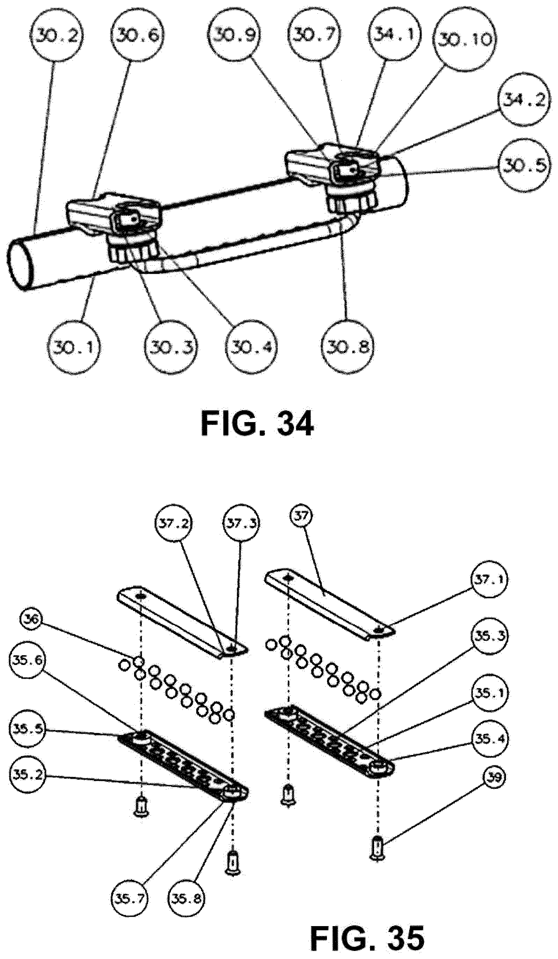

- FIG. 34, FIG. 35: each illustrate the "third positioning mechanism", also referred to as "front-back displacement system", as can be used in the step assembly of FIG. 1A.

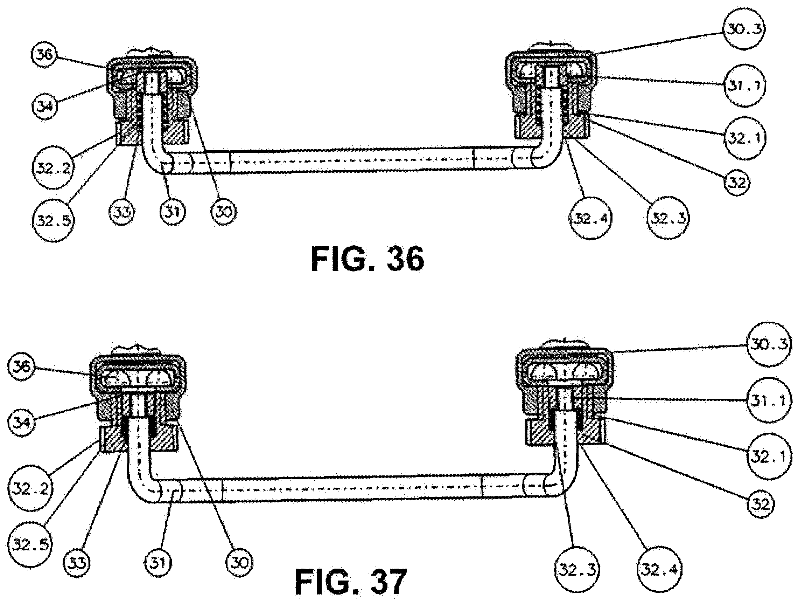

- FIG. 36, FIG. 37: each illustrate a subsystem referred to herein as "locking system and clamping system", as can be used in the step assembly of FIG. 1A. This may be considered to be part of the third positioning mechanism.
- FIG. 36: shows the subsystem in a locked configuration.
- FIG. 37: shows the subsystem in an unlocked configuration.

In the various figures, equivalent elements with respect to their function are always provided with the same reference numerals so that these elements are usually described only once.

In this document, the terms "lateral position" or "transverse position" mean the same.

The present invention relates to a step assembly mountable or mounted to a vehicle, e.g. to a rear end of a commercial vehicle such as e.g. a van. The step assembly can be used to help a person entering or exiting the vehicle via a back door, or can be used to provide easy access to the roof of the vehicle, etc. The step assembly can be attached to the vehicle chassis, e.g. to a tow bar of the vehicle by means of bolts.

The present invention will be explained in more detail referring to a preferred embodiment, but of course the present invention is not limited to this particular example, but only by the claims.

Referring to FIG. 1A and FIG. 1C, the present invention provides a step assembly for removably securing a support platform to a vehicle. The step assembly proposed by the present invention comprises: a support system SS1 (e.g. comprising a support bracket 1 mountable to a trailer hitch or tow bar or tow hitch, and structurally connected thereto via a plurality of positioning mechanisms), a support platform 38 upon which a person can stand. The plurality of positioning mechanisms comprises: a first positioning mechanism SP1A, SP1B configured for selectively securing and adjusting a height position H of the support platform relative to the vehicle; and a second positioning mechanism SP2 configured for selectively securing and adjusting a transverse position T of the support platform relative to the vehicle; and a third positioning mechanism SP3 configured for selectively securing and adjusting a longitudinal position L of the support platform relative to the vehicle.

The first positioning mechanism itself comprise two subsystems, referred to herein as "first up-down displacement mechanism" or "up-down displacement mechanism with head" SP1A, and "second up-down displacement mechanism" or "up-down displacement mechanism with buttons" SP1B.

The step assembly may further comprise a "locking system" and a "clamping system", or the locking system and clamping system may be regarded as being comprised in the second and/or third displacement mechanism.

FIG. 1B is a copy of FIG. 1A, without the indication of the plurality of displacement mechanisms or subsystems.

FIG. 1C shows a schematic high-level view of the various subsystems of the step assembly of FIG. 1A.

FIG. 2 to FIG. 6 show the step assembly of FIG. 1 mounted to the rear of a vehicle, in a first exemplary 3D position relative to the vehicle ("backwards" in longitudinal direction L of the vehicle, "up" in height direction H, and "right" in transverse direction T).

FIG. 2 shows a perspective view (seen from above) of the step assembly, showing the support platform 38 at substantially the same height as a floor of the vehicle.

FIG. 3 shows a perspective view (seen from below) of the step assembly showing its backward position.

FIG. 4 shows a perspective view (seen from behind) of the step assembly showing its upward position.

FIG. 5 and FIG. 6 show perspective views (seen from below) of the step assembly to better illustrate its lateral positon (shifted to its rightmost position, corresponding to a central position with respect to the vehicle).

FIG. 7 to FIG. 11 show the step assembly of FIG. 1 mounted to the rear of a vehicle, in a second exemplary 3D position relative to the vehicle ("medium" in longitudinal direction L, "medium" in height direction H, and "left" in transverse direction T). In the example shown, the step assembly is substantially "at tow bar level".

The "up-down displacement system with head" SP1A comprises a special rotary shaft 7, a special rotary shaft head 5, ball-bearings 6, an inner sliding pin 8, an inner fixing pin 9, a setscrew 10, a carrier bolt 15, a tension spring 11 and a moving pipe support 12. While the special rotary shaft head 5 rotating in the pipe support 3, the special rotary shaft head 5 and the special rotary shaft 7 are pressed on ball-bearing 6 in the pipe support 3. The ball-bearings 6 used help reducing the friction. As a result of the special rotary shaft 7 rotating, the moving pipe support 12 enables the linear movement along the slot in the pipe support 3. The pipe holder 13 is placed into the moving pipe support 12, has the hole in order to allow the carrier bolt 15 sliding on its inner surface easily. While the moving pipe support 12 is sliding on the pipe holder 13, the tension spring 11 that is used between inner fixing pin 9 and the pipe holder 13 is pressed sliding the carrier bolt 15 down. When the carrier bolt 15 is moved up by the spring 11 force, the inner sliding pin 8 that the inner fixing pin 9 is fitted with the setscrew 10 is placed into the slot on the moving pipe support 12. Thus, the system gets locked, therefore the linear movement of the step platform 38 is not allowed. If desired, the "up-down displacement system with head" SP1A can be adjusted in the up and down movement of the step platform 38 by turning the special rotary shaft head 5 to the right and left. As a result, FIG. 12, FIG. 13, FIG. 14, FIG. 15 and FIG. 16 show an upper and lower perspective view of the adjustable step at a position below tow bar level. The "up-down displacement system with buttons" SP1B comprises a height adjuster pipe support 19, springs 18, 23, half bushes 17, 22, setscrews 20, 25, a timing shaft 16, 21 and a pipe adapter 24. Firstly, adjustment of the height adjuster pipe support 19 is done with the locking button 16.1.

FIG. 29 shows a cross-sectional side view of the "up-down displacement with buttons" system SP1B in a locked configuration. The half bush 17 that has the threaded hole 17.3 is used between the height adjuster pipe support 19 and the moving pipe support 12 which are to be connected. The setscrews 20 are prevented from leaving the place where the height adjuster pipe support 19 and the moving pipe support 12 are inserted. In this case the system is locked with inner and outer slots by contacting between the timing shaft 16 and the height adjuster pipe support 19, the timing shaft 16 and the moving pipe support 12. The timing shaft 16 is placed into the height adjuster pipe support 19 and the moving pipe support 12, has the travel slot 16.3 in order to allow the height adjuster pipe support 19 and the moving pipe support 12 sliding on its outer surface easily. While the timing shaft 16 sliding in the moving pipe support 12, the height adjuster pipe support 19 and the half bush 17, the timing shaft 16 button is pressed pushing the spring 18 left. When the timing shaft 16 reaches the height adjuster pipe support 19 until the centering groove 19.9 where it is located on the height adjuster pipe support 19, it is moved up by the spring 18 force and placed into the hole. Thus, the system gets unlocked, therefore radial rotation movement of the height adjuster pipe support 19 that turns 72 degrees is allowed.

FIG. 30 shows a cross-sectional side view of the "up-down displacement with buttons" system SP1B in an unlocked configuration. If desired, the system can be easily locked by stop pushing the locking button 16.1 of the timing shaft 16. Finally, adjustment of the pipe adapter 24 is done with the timing shaft 21 button.

As mentioned above FIG. 29 shows a cross-sectional side view of the "up-down displacement with buttons" SP1B system in a locked configuration. The half bush 22 that has the threaded hole 22.3 is used between the height adjuster pipe support 19 and the pipe adapter 24 which are to be connected. The setscrews 25 are prevented from leaving the place where the height adjuster pipe support 19 and the pipe adapter 24 are inserted. In this case the system is locked by contacting between the timing shaft 21 and the height adjuster pipe support 19, the timing shaft 21 and the pipe adapter 24. The timing shaft 21 is placed into the height adjuster pipe support 19 and the pipe adapter 24, has the slots in order to allow the height adjuster pipe support 19 and the pipe adapter 24 sliding on its outer surface easily. While the timing shaft 21 sliding in the pipe adapter 24, the height adjuster pipe support 19 and the half bush 22, the timing shaft 21 button is pressed pushing the spring 23 right. When the timing shaft 21 reaches the inner groove 24.7 where it is located on the pipe adapter 24, it is moved up by the spring 23 force and placed into the inner groove 24.7. Thus, the system gets unlocked, therefore radial rotation movement of the pipe adapter 24 that turns 72 degrees is allowed.

FIG. 31 shows a cross-sectional side view of the up-down displacement system with buttons in an unlocked configuration. If desired, the system can be easily locked by stop pushing the timing shaft 21 button. As a result, FIG. 2, FIG. 3, FIG. 4, FIG. 5 and FIG. 6 show an upper and lower perspective view of the adjustable step substantially at platform floor level.

FIG. 7 shows a perspective view (seen from above) of the step assembly showing the support platform 38 at a height position slightly lower than a floor of the vehicle.

FIG. 8 shows a perspective view (seen from below) of the step assembly showing its medium position in longitudinal direction.

FIG. 9 shows a perspective view (seen from behind) of the step assembly showing its medium height position.

FIG. 10 and FIG. 11 show perspective views (seen from below) of the step assembly to better illustrate its lateral positon (shifted to its leftmost position, corresponding to a laterally outward position with respect to the vehicle).

FIG. 12 to FIG. 16 show the step assembly of FIG. 1 mounted to the rear of a vehicle, in a third exemplary 3D position relative to the vehicle ("forward" in longitudinal direction L, "down in height direction H, and "right" in transverse direction T).

FIG. 12 shows a perspective view (seen from above) of the step assembly showing the support platform 38 at a height position considerably lower than a floor of the vehicle.

FIG. 13 shows a perspective view (seen from below) of the step assembly showing its forward position in longitudinal direction.

FIG. 14 shows a perspective view (seen from behind) of the step assembly showing its downward height position.

FIG. 15 and FIG. 16 show perspective views (seen from below) of the step assembly to better illustrate its lateral positon (shifted to its rightmost position, corresponding to a laterally central position with respect to the vehicle).

FIG. 17 and FIG. 18 show an exploded view of a subsystem of the step assembly of FIG. 1, referred to herein as the "support system" SS1.

The support system SS1 comprises a mounting bracket 1, a bolt 2, a pipe support 3, the setscrew 4, a pipe holder 13 and a fixing bolt 14. The support system SS1 carries the entire load of the adjustable step. The mounting bracket 1 is used between the pipe support 3 and the tow bar which may be connected to a side surface of the tow bar. The pipe support 3 is placed onto the mounting bracket 1, has a slot in order to allow the inner sliding pin 8 and the moving pipe support 12 to direct sliding on its inner surface easily.

FIG. 19 illustrates parts of the "first positioning mechanism" also referred to herein as "up-down displacement system with head" SP1A.

FIG. 20 to FIG. 22 show parts of the mechanism shown in FIG. 19 in more detail.

FIG. 23 to FIG. 25 illustrates another part of the "first positioning mechanism".

FIG. 26 to FIG. 28 illustrates another part of the "first positioning mechanism".

FIG. 29 shows a cross-sectional side view of the "up-down displacement system with buttons" SP1B in a locked configuration.

FIG. 30 and FIG. 31 show a cross-sectional side view of the "up-down displacement system with buttons" SP1B in an unlocked configuration.

FIG. 32 and FIG. 33 illustrate the "second positioning mechanism", also referred to herein as "left-right displacement system" SP2, as can be used in the step assembly of FIG. 1A.

The left-right displacement system SP2 comprises a locking button 28, a button positioner spring 27, a button positioner 26, a fixing setscrew 29 and a linear guided pipe receiver 30 (see also FIG. 1A). The locking button 28 is used between the pipe adapter 24 and the linear guided pipe receiver 30 which are to be connected. The locking button 28, which is placed onto the button positioner spring 27, has protrusions in order to allow the linear guided pipe receiver 30 sliding on its surface easily. While the linear guided pipe receiver 30 sliding on the locking button 28, the locking button 28 is pressed pushing the button positioner springs 27 down. When the locking button 28 reaches the linear guided pipe receiver 30 slots, which are located on the linear guided pipe receiver 30, it is moved up by the button positioner spring 27 force and placed onto the protrusions. Thus, the system gets unlocked, therefore linear movement of the linear guided pipe receiver 30 is allowed. If desired, the system can be locked by stop pushing the locking button 28.

FIG. 34 and FIG. 35 illustrate the "third positioning mechanism", also referred to as "front-back displacement system" SP3 as can be used in the step assembly of FIG. 1A.

The front-back displacement system SP3 comprises an upper linear guide rail 37, a lower linear guide rail 35, ball-bearing 36, a bolt 39, the step platform 38, and optionally also a reflective tape 43, a parking sensor 41, a wiring harness 42 and fixings with cable tie 40 (see also FIG. 1A). The ball-bearings 36 are specially used as to prevent the friction created by the linear movement that occurs between the linear guided pipe receiver 30 and the lower linear guide rail 35. The lower linear guide rail 35 has the chamfered holes 35.3 to center the ball-bearings 36 on it. It prevents the ball-bearing 36 from coming out of its place and guides the linear movement of the linear guided pipe receiver 30.

FIG. 36 and FIG. 37 illustrate a subsystem referred to herein as "locking system and clamping system", as can be used in the step assembly of FIG. 1A.

FIG. 36 and FIG. 37 show a cross-sectional side view of the "locking system" and the "clamping system" in a locked and an unlocked configuration, respectively.

The locking system comprises a special nut 34, a spring 33, an adjustable handle 32 and a pull handle 31. The pull handle 31 fits with the spring 33 and the special nut 34 inside of adjustable handle 32 has protrusions in order to allow the lower linear guide rail 35 sliding on its surface easily. While the special nut 34 sliding in the adjustable handle 32, the special nut 34 is pressed pushing the spring 33 down. When the special nut 34 reaches the stopping hole 35.1 which it is located on the upper linear guide rail 37, it moves up by the spring 33 force and is placed into the the inner groove 32.5. Thus, the system gets unlocked, therefore the linear movement of the upper 37 and the lower linear guide rail 35 is allowed. If desired, the system can be locked by stop pushing the pull handle 31.

The clamping system comprises adjustable handles 32 and a linear guided pipe receiver 30. The adjustable handle 32 that attached to the linear guided pipe receiver 30 compress the upper linear guide rail 37 to not move. If desired, the system can be loosened to facilitate the linear movement.

### FIRST EXEMPLARY METHOD OF MOUNTING THE STEP ASSEMBLY TO A VEHICLE

The adjustable step may be mounted to the vehicle in the following manner:
The mounting bracket 1 has a prismatic 1.1 and a cylindrical protrusion 1.2 where pipe support 3 is mounted, two fixing holes 1.3 1.4 where the bolt 2 and the setscrew 4 is mounted.

The pipe support 3 has a fixing hole 3.1 where the mounting bracket 1, a back threaded hole 3.10 where the pipe holder 13 and a front cylindrical hole 3.3 where the special rotary shaft 7 is mounted. It has a holding sphere 3.2 and a lower stiffener 3.8 carrying and supporting the entire system's load. It has a prismatic protrusion 3.9 where the pipe holder 13 is mounted. It has an inner groove 3.4 where the special rotary shaft head 5 and the ball-bearing 6 are placed and a side groove 3.5 providing the special rotary shaft head 5 ease of use. It has an upper groove 3.11, a lower groove 3.12 and a back groove 3.15 where the pipe holder 13 is mounted. It has an upper side groove 3.13 and a lower side groove 3.14 where the moving pipe support 12 is to be placed, providing easy mounting of the inner sliding pin 8. It has a lower slot 3.6 where prismatic protrusion 1.1 of the mounting bracket 1 are to be placed and the pipe support 3 not to rotate on the mounting bracket 1. It also has a side slot 3.7 that the inner sliding pin 8 and the moving pipe support 12 are to be placed providing the inner sliding pin 8 and the moving pipe support 12 travelling along itself while being rotated.

The special rotary shaft head 5 has an inner slot 5.1 where the special rotary shaft 7 is mounted. It has double knurls 5.2 that provide easy rotation of the special rotary shaft head 5. It has ball-bearing grooves 5.3 where the ball-bearings 6 to be placed in order to prevent the friction created by rotation of the movement that occurs between the pipe support 3 and the special rotary shaft head 5, the pipe support 3 and the special rotary shaft 7, the pipe holder 13 and the special rotary shaft 7. It has a rotating groove 5.4 where an L-shaped tool is placed for easy rotating. It also has a side groove 5.5 where the knurls not to be created on its cylindrical surface.

The special rotary shaft 7 has a trimmed protrusion 7.1 which is placed into the inner slot 5.1 of the special rotary shaft head 5. It has a front slot 7.2 and a back slot 7.3 where the ball-bearings 6 are to be placed in order to prevent the friction created by rotation of the movement. It is also a special thread 7.4 which carries the entire system's load and controls the movement of the up-down displacement system.

The inner sliding pin 8 that has a sliding hole 8.1 through which the special rotary shaft 7 in the pipe support 3 passes is mounted into the pipe support 3. It has a supporting protrusion 8.2 where the moving pipe support 12 and the inner fixing pin 9 to be placed. The supporting protrusion 8.2 helps to limit the movement of the inner fixing pin 9. It has an upper groove 8.3 and a lower groove 8.4 where the side slot to be placed. The upper groove 8.3 and the lower groove 8.4 direct the linear movement of the inner sliding pin 8 in the side slot 3.7. It has a fixing protrusion 8.5 where the moving pipe support 12 to be placed for limiting the movement of the inner sliding pin 8 in the lower slot 12.5 and being fixed to the inner fixing pin 9. It has a fixing hole 8.6 where the setscrew 10 is mounted for fixing the position of the inner fixing pin 9.

The inner fixing pin 9 has a threaded hole 9.5 where the setscrew 10, and has a fixing threaded hole 9.1 where the carrier bolt 15 and has a fixing hole 9.4 where the setscrew 10 is mounted. It has a pressing groove 9.2 where the tension spring 11 to be placed. It provides necessary tension force to the inner fixing pin 9. It has a fixing groove 9.3 where the inner sliding pin 8 to be placed.

The setscrew 10 is mounted into the threaded hole 9.1 in order to fix the inner sliding pin 8 on the inner fixing pin 9.

The tension spring 11 is placed into the inner fixing pin 9 and the pipe holder 13.

The moving pipe support 12 is placed onto the half bush 17 and has a threaded hole 12.8 where the special rotary shaft 7 is mounted. It turns the rotational movement into the linear movement while making contact with each other. It has a lower groove 12.6 and an upper groove 12.7 where the side slot 3.7 of the pipe support 3 is mounted. It has a fitting hole 12.9 where the setscrew 10 is mounted in order to connect the inner sliding pin and the inner fixing pin to be easily inserted into the moving pipe support. It has a pushing hole 12.1 where the timing shaft 16 to be placed for easy pushing of the locking button. It has a fixing hole 12.2 where setscrew 20 is mounted in order to fix the position of the moving pipe support 12. It has a sliding cutter shaft 12.3 where the timing shaft 16 is mounted. It directs the right-left movement of the timing shaft. It also has an upper slot 12.4 and a lower slot 12.5 where the pipe holder 13 and the inner sliding pin 8 to be placed in order to limit the linear movement of the inner sliding pin 8.

The ball-bearings 6 are placed into the back slot 7.3. Then the pipe holder 13 has a back protrusion 13.8 mounted into the back groove 3.15. It keeps the special rotary shaft 7 and the ball-bearing 6 in their place. It has a front groove 13.1 where the tension spring 11 to be placed. It has a back groove 13.2 where the carrier bolt 15 is placed. It allows connecting the inner fixing pin and prevents the carrier bolt 15 from coming out of its place. It has a sliding hole 13.3 where the carrier bolt 15 is mounted. It has an upper protrusion 13.4 and a lower protrusion 13.5 where the pipe support 3 is mounted. It also has an upper chamfered hole 13.6 and a lower chamfered hole 13.7 where the fixing bolt 14 is mounted.

The fixing bolt 14 is mounted into the back threaded hole 3.10

The carrier bolt 15 is placed into the sliding hole 13.3.

The timing shaft 16 has a locking button 16.1 where is placed into the pushing hole 12.1. It is a specially designed locking button 16.1 as to go left and right easily through the pushing hole 12.1 in the moving pipe support 12. It has a long timing shaft 16.2 where to be placed into the moving pipe support and a short timing shaft 16.4 where to be placed into the height adjuster pipe support 19. It has a travel slot 16.3 where the setscrew 20 to be placed. It provides necessary travel to the timing shaft 16 to go right and left while pressing and depressing it. It moves from right to left and from left to right with the effect of the locking button 16.1. It allows the height adjuster pipe support 19 to rotate when moving from right to left. It allows the height adjuster pipe support 19 to fix when moving from left to right. It has a centering groove 16.5 where the spring 18 to be placed. It is used to center and direct the spring 18 while pressing and depressing the locking button 16.1.

The half bush 17 is placed onto the timing shaft 16, into the moving pipe support 12 and the height adjuster pipe support 19. It has a holding feature 17.1 that the height adjuster pipe support 19 and the moving pipe support 12 to be placed and prevented from sliding out of the place. It has a positioning chamfer 17.2 that allows sliding of the height adjuster pipe support 19 and the moving pipe support 12 easily. It has a threaded hole 17.3 where the setscrew 20 is mounted. It has a half hole 17.4 where the timing shaft 16 to be placed.

The spring 18 is placed into the centering groove 19.9.

The height adjuster pipe support 19 is placed onto the half bush 17. It has a pushing hole 19.1 that made for easy pushing of the locking button 16.1 of the timing shaft 16. It has a fixing hole 19.2 where the setscrew 20 is mounted. It has a sliding cutter shaft 19.3 where is placed onto the timing shaft 16 and directs the right-left movement of the timing shaft 16. It has an inner groove 19.4 where the locking button 16.1 is placed. It has a supporting fillet 19.5 that used to increase the resistance against incoming loads during rotation. It has a thin protrusion 19.6 that used to increase the resistance against incoming loads during rotation. It has an adjusting slot 19.7 where the setscrew 20 is mounted, restricts the rotational movement of the height adjuster pipe support 19 and prevents it from moving out. It has a rotating cutter shaft 19.8 allowing the rotation of the height adjuster pipe support 19 when the timing shaft 16 in the height adjuster pipe support 19 moves from right to left and prevents the rotation of the height adjuster pipe support 19 when it moves from left to right. It also has a centering groove 19.9 that used to center and direct the spring 18 while pressing and depressing the locking button 16.1 of the timing shaft 16.

The setscrew 20 is mounted into the threaded hole 17.3 of the half bush 17.

The timing shaft 21 is placed into the height adjuster pipe support 19 and the pipe adapter 24. It has a side button 21.1 where to be placed as to go left and right easily through the pushing hole 19.1 in the height adjuster pipe support 19. It has a long timing shaft 21.2 where to be placed into the height adjuster pipe support 19. It has a travel slot 21.3 where the setscrew 25 to be placed in order to provide necessary travel to the timing shaft 21 to go right and left while pressing and depressing it. It has a short timing shaft 21.4 where to be placed into the pipe adapter 24 and moves from left to right and from right to left with the effect of the side button 21.1. It also allows the pipe adapter 24 to rotate and fix when moving from left to right.

The half bush 22 is placed onto the timing shaft 21 into the height adjuster pipe support 19 and the pipe adapter 24. It has a holding feature 22.1 preventing the height adjuster pipe support 19 and the pipe adapter 24 from sliding out of the place. It has a positioning chamfer 22.2 that allows sliding of the height adjuster pipe support 19 and the pipe adapter 24 easily. It also has a threaded hole 22.3 where the setscrew 25 and a half hole 22.4 where the timing shaft 21 to be placed.

The spring 23 is placed into the inner groove 24.7.

The pipe adapter 24 is placed onto the timing shaft 21 and into the linear guided pipe receiver 30. It has a sliding slot 24.1 where the setscrew 25 to be placed. It is used to control and provide necessary travel to locking button to go up and down while pressing and depressing it. It has an adjusting slot 24.2 where the setscrew 25 to be placed in order to restricts the rotational movement of the pipe adapter and prevents it from moving out. It has a directing protrusion 24.3 used for the linear guided pipe receiver 30 not to turn on the pipe adapter 24. It has a fixing hole 24.4 where the button positioner 26 is mounted. It has an inner groove 24.5 where the button positioner 26, the locking button 28 and the button positioner spring 27 to be positioned. It has a rotating cutter shaft 24.6 that allows the rotation of the pipe adapter 24 when the timing shaft 21 in the pipe adapter 24 moves from left to right and prevents the rotation of the timing shaft 21 when it moves from right to left. It also has an inner groove 24.7 where the spring is mounted.

The setscrew 25 is mounted into the threaded hole 22.3 of the half bush 22.

The button positioner 26 is placed into the inner groove 24.5. It has a controlling protrusion 26.1 where the fixing setscrew 29 to be positioned. It has an inner threaded hole 26.2 where the fixing setscrew 29 is mounted. It has a combining chamfer 26.3 that enables the joining of separate elements made by welding. It has a supporting chamfer 26.4 that enables the joining of separate button positioner elements made by welding. It has an inner protrusion 26.5 that the linear guided pipe receiver 30 is mounted and designed for the locking button 28 going through the locking slot 30.1. It has a left thin cover 26.6 and a right thin cover 26.7 that allows the button positioner 26 to fit into the pipe adapter 24. It also has outer chamfer 26.8 that made so that sharp corners do not harm the user during installation.

The button positioner spring 27 is placed into the inner protrusion 26.5.

The locking button 28 is placed into the inner groove 24.5. It has a locking protrusion 28.1 where is mounted as to go through the locking slot 30.1 in the linear guided pipe receiver 30. It has a sliding hole 28.2 that allows centering the locking button 28 moving up and down. It has a centering protrusion 28.3 that allows centering the locking button 28 moving up and down. It also has a combining chamfer 28.4 that enables the joining of separate elements made by welding.

The fixing setscrew 29 is mounted into the inner threaded hole 26.2

The linear guided pipe receiver 30 is mounted onto the pipe adapter 24. It has a locking slot 30.1 that controls the locking button 28 pass through inside. It has a sliding slot 30.2 that located outside the directing protrusion 24.3 of the pipe adapter 24 and controls the linear movement of the linear guided pipe receiver 30. It has a side protrusion 30.3 that used to guide and stabilize the movements of the lower 35 and the upper linear guide rails 37. It has a supporting protrusion 30.4 that helps to fix by tightening the lower 35 and the upper linear guide rail 37 with the adjustable handle 32. It has a threaded hole 30.5 where the adjustable handle is mounted and it prevents the vibrations that occur on the lower 35 and the upper linear guide rails 37 compressing it. It has a front groove 30.6 and a back groove 30.7 where the bolts 39 of the step platform 38 to be placed during the forward and the backward movement of the linear guided pipe receiver 30. It has an outer fillet 30.8 that made to prevent the user during the rotation of the adjustable handle 32. It has an outer chamfer 30.9 and an outer fillet 30.10 that made to prevent the user from harms of sharp edges.

The pull handle 31 is mounted into the controller hole 32.3. It has a threaded protrusion 31.1 that prevents the special nut 34 from coming out of its place.

The adjustable handle 32 is mounted into the threaded hole 30.5. It has a threaded protrusion 32.1 where the adjustable handle 32 is mounted and allows the locking system to be fixed to the linear guided pipe receiver 30. It has an adjusting groove 32.2 that is used to easily tighten the lower linear guide rail 35 by hand. It has a controller hole 32.3 that allows movement of the pull handle 31. It has an inner fillet 32.4 that is made to prevent the interference with the adjustable handle 32 during the up and down movement of the pull handle 31. It also has an inner groove 32.5 where the spring 33 to be placed and the movement of the pull handle 31 is kept under control.

The spring 33 is placed onto the pull handle 31.

The special nut 34 is mounted onto the pull handle 31. It has threaded holes 34.1 where the pull handle 31 is mounted, then rotating holes 34.2 that can be easily rotated and tightened.

The lower linear guide rail 35 are mounted onto the bolts 39. It has a stopping hole 35.1 that the special nut 34 is mounted provides locking by allowing the special nut 34 pass through inside. It has a fixing protrusion 35.2 that designed to support between the lower linear guide rail 35 and the upper linear guide rail 37 when it is connected with bolt 39 on the step platform 38. It has a chamfered hole 35.3 where the ball-bearings 36 to be located. It has a chamfered hole 35.4 and an inner chamfered hole 35.6 where the bolt 39 is mounted. It has a fixing groove 35.5 that positioned on the lower linear guide rail 35 provides locking by allowing the special nut 34 pass through inside. It also has an outer chamfer 35.7 and an outer fillet 35.8 that made to prevent the user from harms of sharp edges.

The ball-bearings 36 are placed into the chamfered hole 35.3.

The upper linear guide rail 37 has an inner hole 37.1 where the bolt 39 is mounted. It has an outer chamfer 37.2 and an outer fillet 37.3 that made to prevent the user from harms of sharp edges.

Step platform 38 is mounted onto the lower linear guide rail 35 and the upper linear guide rail 37.

Bolt 39 is mounted into the step platform 38.

Optionally,
- Fixing with cable tie 40 is mounted into the step platform 38.
- Parking sensor 41 is mounted into the step platform 38.
- Wiring harness 42 is mounted into the fixing with cable tie 40.
- Reflective tape 43 is placed onto side surfaces of the step platform 38.

### SECOND EXEMPLARY METHOD OF MOUNTING THE STEP ASSEMBLY TO A VEHICLE

Firstly, the mounting bracket 1 is connected to the side surface of the tow bar with the bolt 2. The pipe support 3 is inserted into the mounting bracket 1. It goes into the mounting bracket 1 until the end of the cylindrical protrusion 1.2. The prismatic protrusion 1.1 prevents longitudinal and radial movement. When it reaches, the setscrew 4 is mounted into the fixing hole 3.1.

Then, the ball-bearings 6 are inserted into the ball-bearing grooves 5.3. It goes into the ball-bearing grooves 5.3 until an inner groove 3.4 reaches the special rotary shaft head 5. When it reaches, the ball-bearings 6 are inserted into the front slot 7.2. It goes into the front slot 7.2 until the inner groove 3.4 reaches the special rotary shaft 7.

Then, the inner sliding pin 8 is inserted into the side slot 3.7. It goes into the side slot 3.7 until the end of the inner groove 3.16 and the moving pipe support 12 is inserted into the side slot 3.7 by moving it on rotating the special rotary shaft 7. It goes into the side slot 3.7 until the inner groove 3.16 reaches the inner sliding pin 8.

Then, the ball-bearings 6 are inserted into the back slot 7.3. It goes into the back slot 7.3 until the back groove 3.15 reaches the pipe holder 13. When it reaches, the fixing bolts 14 are mounted in the bottom and top of the back threaded hole 3.10. The fixing bolts 14 go in the bottom and top of the back threaded hole 3.10 until the upper groove 3.11 and the lower groove 3.12 reaches the pipe holder 13.

Then, the moving pipe support 12 is inserted onto the supporting protrusion 8.2. It goes onto the supporting protrusion 8.2 until the fixing protrusion 8.5 reaches the inner fixing pin 9. When it reaches, the setscrew 10 is inserted into the threaded hole 9.5. It goes onto the threaded hole 9.5 until the outer surface of inner fixing pin 9.

Then, the tension spring 11 is inserted between the front groove 13.1 and the fixing threaded hole 9.1. It goes between the front groove 13.1 and the fixing threaded hole 9.1 until the sliding hole 13.3 reaches the carrier bolt 15. When it reaches, the carrier bolt 15 is inserted into fixing threaded hole 9.1. It goes into the fixing threaded hole 9.1 until the end of the fixing threaded hole 9.1.

Then, the two half bushes 17 as a whole are inserted onto the travel shaft 16.6. The two half bushes 17 and the timing shaft 16 are inserted into the inner groove 12.10 and the pushing hole 12.1. The two half bushes 17 and the timing shaft 16 go into the inner groove 12.10 and the pushing hole 12.1 until the beginning of the sliding cutter shaft 12.3 and the end of the pushing hole 12.1 reach the places. When the two half bushes 17 and the timing shaft 16 reach, the setscrew 20 is mounted into the threaded hole 17.3. The spring 18 is inserted into the centering groove 19.9. The height adjuster pipe support 19 is inserted onto other side of the two half bushes 17 as a whole. The other sides of the two half bushes 17 go into the inner groove 19.10 until the beginning of the rotating cutter shaft 19.8 reaches the place. When the other sides of the two half bushes 17 reach, the setscrew 20 is mounted into the threaded hole 17.3. As a result, the spring 18 is placed between the centering groove 19.9 and the centering groove 16.5.

Then, the two half bushes 22 as a whole are inserted onto the travel shaft 21.5. The two half bushes 22 and the timing shaft 21 are inserted into the inner groove 19.11 and the pushing hole 19.1. The two half bushes 22 and the timing shaft 21 go into the inner groove 19.11 and the pushing hole 19.1 until the beginning of the sliding cutter shaft 19.3 and the end of the pushing hole 19.1 reach the places. When the two half bushes 22 and the timing shaft 21 reach, the setscrew 25 is mounted into the threaded hole 22.3. The spring 23 is inserted into the inner groove 24.7. The pipe adapter 24 is inserted onto other side of the two half bushes 22 as a whole. The other sides of the two half bushes 22 go into the inner groove 24.7 until the beginning of the rotating cutter shaft 24.6 reaches the place. When the other sides of the two half bushes 22 reach, the setscrew 25 is mounted into the threaded hole 22.3. As a result, the spring 23 is placed between the inner groove 24.7 and the side surface of the timing shaft 21.

Then, the button positioner spring 27 is inserted onto the button positioner 26. When the button positioner spring 27 goes onto the inner protrusion 26.5 until the supporting chamfer 26.4 reaches, the locking button 28 is inserted into the button positioner spring 27. The sliding hole 28.2 of the locking button 28 goes onto the inner protrusion 26.5 until the cylindrical outer surface of the button positioner 26 and the cylindrical outer surface of the locking button 28 reach to be concentric. When it reaches, they are inserted into the inner groove 24.5 of the pipe adapter 24. They go into the inner groove 24.5 until the inner threaded hole 26.2 reaches the fixing hole 24.4. When it reaches, the fixing setscrew 29 is mounted into the inner threaded hole 26.2. It must be inserted all the way length into the fixing hole 24.4 because the linear guided pipe receiver 30 slides on the directing protrusion 24.3 is that prevents radial movement.

Then, the linear guided pipe receiver 30 is inserted onto the pipe adapter 24. It goes onto the pipe adapter 24 until the sliding slot 24.1 reaches the locking protrusion 28.1. The locking protrusion 28.1 is that prevents linear movement. When the locking button 28 is manually pressed into the sliding slot 24.1 by the spring 27 force, it reaches. When it reaches, the locking button 28 is depressed into the sliding slot 24.1 by the spring 27 force. As a result, the locking protrusion 28.1 of the locking button 28 is placed into the locking slot 30.1 of the linear guided pipe receiver 30.

Then, the adjustable handle 32 is inserted into the pull handle 31. The spring 33 is inserted onto the pull handle 31 and inserted into the adjustable handle 32. The special nut 34 is mounted onto the pull handle 31. It goes into the pull handle 31 until the threaded protrusion 31.1. Those that are mounted onto the pull handle 31 are mounted into the threaded hole 30.5 by means of the adjustable handle 32 until the inner surface of the side protrusion 30.3 reaches the lower linear guide rail 35.

Then, the ball-bearings 36 are inserted onto the lower linear guide rail 35. They go into the chamfered hole 35.3. The upper linear guide rail 37 is inserted onto the ball-bearings 36. The upper linear guide rail 37 goes onto the ball-bearings 36 until the chamfered hole 35.4 and the inner hole 37.1 reach to be concentric. When they reach, they are inserted into the linear guided pipe receiver 30. Before they go into the inner surface of the side protrusion 30.3, the pull handle 31 is pulled down. As a result, the special nut 34 that mounted onto the pull handle 31 goes into the inner groove 32.5 until the side surface of the special nut 34 reaches the inner surface of the side protrusion 30.3. When it reaches, they the upper linear guide rail 37, the ball-bearings 36 and the lower linear guide rail 35 go into the inner surface of the side protrusion 30.3 until the cylindrical outer surface of the special nut 34 and the desired stopping hole 35.1 reach to be concentric. When it reaches, the pull handle 31 pulling down is stopped. The special nut 34 that mounted onto the pull handle 31 goes into the stopping hole 35.1 with the effect of the spring 33.

Then, the step platform 38 is inserted onto the linear guided pipe receiver 30.

Optionally, after the bolt 39 is mounted into the step platform, the fixings with cable tie 40 are mounted into the step platform 38. Then, the parking sensors 41 are mounted into the step platform 38 and the wiring harness 42 is mounted into the fixing with cable tie 40. Finally, the reflective tape 43 is placed onto the side surfaces of the step platform 38. Thus, connection is completed. Of course, the order of some of the steps may be changed.

### REFERENCE NUMERALS (and brief explanation of their function in a preferred embodiment)

| | | |
|---|---|---|
| 1 | Mounting bracket | It is the part that connected to the side surface of the tow bar with the bolt. |
| 1.1 | Prismatic protrusion | It is a protrusion that has a prismatic shape used for the pipe support not to turn on the mounting bracket. |
| 1.2 | Cylindrical protrusion | It is a protrusion that has a cylindrical shape used to center the position of the pipe support. |
| 1.3 | Fixing hole | It is a hole that tapped used to fix the position of the pipe support. |
| 1.4 | Fixing hole | It is a hole that used to fix the position of the mounting bracket. |
| 2 | Bolt | It used to fix the mounting bracket to the side surface of the tow bar. |
| 3 | Pipe support | It is the part that acts as a connection between the mounting bracket and the moving pipe support provides guidance on adjusting height of the step platform. It allows circular rotating of the special rotary shaft by means of the special rotary shaft head. It is the part that enables the linear movement of the inner sliding pin and the moving pipe support through the side slot on. It is the part that prevents the special rotary shaft head from being released works in contact with the ball-bearings. |
| 3.1 | Fixing hole | It is a hole that used to fix the position of the pipe support. |
| 3.2 | Holding sphere | It is a sphere that carries the entire system's load. It restricts the special rotary shaft head inserted into it when it rotates. It keeps in |
| | | contact with the ball-bearing and prevents them from getting out of their places. |
| 3.3 | Front cylindrical hole | It is a hole that guides the special rotary shaft inserted. |
| 3.4 | Inner groove | It is a groove that provides ease of fitting when inserting the special rotary shaft into the special rotary shaft head. |
| 3.5 | Side groove | It is a groove that designed to fit the hand ergonomics and provides ease of use. |
| 3.6 | Lower slot | It is a slot that is used for the pipe support not to rotate on the mounting bracket. |
| 3.7 | Side slot | It is a slot that created to the side cylindrical surface of the pipe support, controls the linear movement of the inner sliding pin and the moving pipe support. |
| 3.8 | Lower stiffener | It is a stiffener that specially designed to increase the strength of the pipe support carrying the entire load of the systems. |
| 3.9 | Prismatic protrusion | It is a protrusion that has a prismatic shape with two-edge rounded used to fix the position of the pipe holder. |
| 3.10 | Back threaded hole | It is a threaded hole that prevents the pipe holder from moving right and left by inserting it into the upper and lower groove. |
| 3.11 | Upper groove | It is a groove that directs the pipe holder when attaching it onto the pipe support and restricts the front and back movement of the pipe holder. |
| 3.12 | Lower groove | It is a groove that directs the pipe holder when attaching it onto the pipe support and restricts the front and back movement of the pipe holder. |
| 3.13 | Upper side groove | It is a groove that used for easy mounting of the inner sliding pin. |
| 3.14 | Lower side groove | It is a groove that used for easy mounting of the inner sliding pin. |
| 3.15 | Back groove | It is a groove where the pipe holder mounted for preventing the special rotary shaft and the ball-bearing from leaving out of its place. |
| 3.16 | Inner groove | It is a groove where the inner sliding pin mounted. |
| 4 | Setscrew | It is used to fix the pipe support on the mounting bracket. |
| 5 | Special rotary shaft head | It is a specially designed part that enables to be rotated by attaching the special rotary shaft and enables the linear sliding movement of the moving pipe support along the side slot in the pipe support. Its continuous contact with the ball bearings prevents the friction between them with the pipe support. |
| 5.1 | Inner slot | It is a slot that mounted on the special rotary shaft helps to transfer the rotational movement |
| 5.2 | Double knurls | It is double knurls that created on a cylindrical surface using a pattern of left handed and right handed helical sweeps. |
| 5.3 | Ball-bearing groove | It is a groove in which the ball-bearing specially used as to prevent the friction rolls. |
| 5.4 | Rotating groove | It is a groove in which an L-shaped tool that rotates the special rotary shaft head is fitted. |
| 5.5 | Side groove | It is a groove that knurls not created on the cylindrical surface. |
| 6 | Ball-bearing | It is specially used as to prevent the friction created by rotation of the movement that occurs between the pipe support and the special rotary shaft head, the pipe support and the special rotary shaft, the pipe holder and the special rotary shaft. |
| 7 | Special rotary shaft | It is the part that fitted with the inner sliding pin and the special rotary shaft head. It takes rotation motion created by the special rotary |
| | | shaft head and turns rotation movement into the linear movement by the inner sliding pin. |
| 7.1 | Trimmed protrusion | It is a protrusion which is fitted into the special rotary shaft head to transfer the rotational movement. |
| 7.2 | Front slot | It is a slot that formed on the special rotary shaft and the ball-bearings are placed in. It is specially used as to prevent the friction created by the rotational movement that occurs between the special rotary shaft and the inner groove of the pipe support. |
| 7.3 | Back slot | It is a slot that formed on the special rotary shaft and the ball-bearing are placed in. It is specially used as to prevent the friction created by the rotational movement that occurs between the special rotary shaft and back protrusion of the pipe holder. |
| 7.4 | Special thread | It is a special thread that controls the movement of the up-down displacement system and carries the forces on it. |
| 8 | Inner sliding pin | It is the part that attached on the special rotary shaft and directed the linear movement by the side slot on the pipe support. |
| 8.1 | Sliding hole | It is a hole through which the special rotary shaft in the pipe support passes. |
| 8.2 | Supporting protrusion | It is a specially designed protrusion that helps to limit the movement of the inner fixing pin in the lower slot on the moving pipe support. |
| 8.3 | Upper groove | It is an upper groove that directs the linear movement of the inner sliding pin in the side slot on the pipe support. |
| 8.4 | Lower groove | It is a lower groove that directs the linear movement of the inner sliding pin in the side slot on the pipe support. |
| 8.5 | fixing protrusion | It is a specially designed protrusion to limit the movement of the inner sliding pin in the lower slot on the moving pipe support and be fixed the inner fixing pin. |
| 8.6 | Fixing hole | It is a hole that used to fix the position of the inner fixing pin. |
| 9 | Inner fixing pin | It is constantly exposed to spring effect within the moving pipe support and its movement is restricted by the lower slot on the lower side of the moving pipe support. |
| 9.1 | Fixing threaded hole | It is a threaded hole that allows the pipe holder to be connected with the carrier bolt. |
| 9.2 | Pressing groove | It is a groove in which the tension spring provides necessary tension force to the inner fixing pin. |
| 9.3 | Fixing groove | It's a groove that used to fit into the inner sliding pin. |
| 9.4 | Fixing hole | It is a hole that allows the inner sliding pin to be connected with the setscrew. |
| 9.5 | Threaded hole | It is a threaded hole that allows the inner sliding pin to be connected with the setscrew. |
| 10 | Setscrew | It is used to fix the inner sliding pin on the inner fixing pin. |
| 11 | Tension spring | It is the part that used between the inner fixing pin and the pipe holder directs movement of the inner fixing pin through the side slot on pipe support. It is for providing necessary tension force to the inner fixing pin to keep the inner sliding pin in a limited position through the moving pipe support. |
| 12 | Moving pipe support | One side of the moving pipe support is attached to the special rotary shaft and the other side is attached to the half bush. The rotation movement is turned into the linear movement |
| | | on the side of attaching to the special rotary shaft and the height adjuster pipe support is fixed on the side of attaching to the half bush. |
| 12.1 | Pushing hole | It is a hole made for easy pushing of the locking button on the timing shaft. |
| 12.2 | Fixing hole | It is a hole that used to fix the position of the moving pipe support. |
| 12.3 | Sliding cutter shaft | It is attached to the timing shaft and directs the right-left movement of the timing shaft. |
| 12.4 | Upper slot | It is a groove that made for the pipe holder not to interfere with the moving pipe support. |
| 12.5 | Lower slot | It is a groove that in the pipe holder and the inner sliding pin limits the linear movement of the inner sliding pin. It also made for the pipe holder not to interfere with the moving pipe support. |
| 12.6 | Lower groove | It is a lower groove that allows it to be oriented in the side slot of the pipe support. |
| 12.7 | Upper groove | It is an upper groove that allows it to be oriented in the side slot of the pipe support. |
| 12.8 | Threaded hole | It is a threaded hole on the shaft and turns the rotational movement into the linear movement while making contact with each other. |
| 12.9 | Fitting hole | It is a hole that allows the setscrew used to connect the inner sliding pin and the inner fixing pin to be easily inserted into the moving pipe support. |
| 12.10 | Inner groove | It is a groove where the two half bush as a whole are mounted. |
| 13 | Pipe holder | It used to fix the pipe support with the fixing bolt. It directs and limits the linear movement of the moving pipe support through the carrier bolt. |
| 13.1 | Front groove | It is a groove that guides and holds the tension spring while providing necessary tension force. |
| 13.2 | Back groove | It allows to be connected the inner fixing pin and prevents the carrier bolt from coming out of its place. |
| 13.3 | Sliding hole | It slips through the carrier bolt that connected to the inner fixing pin. |
| 13.4 | Upper protrusion | It is an upper protrusion that allows the upper groove on the pipe support mounted. |
| 13.5 | Lower protrusion | It is a lower protrusion that allows the upper groove on the pipe support mounted. |
| 13.6 | Upper chamfered hole | It is a hole where the bolt that attached on the upper protrusion is placed. |
| 13.7 | Lower chamfered hole | It is the hole where the bolt that is attached on the lower protrusion is placed. |
| 13.8 | Back protrusion | It is a protrusion that is in constant contact with the ball-bearing and keeps the special rotary shaft and the ball-bearing their place. |
| 14 | Fixing bolt | It used to fix the moving pipe support to the top and bottom surface of the pipe support. |
| 15 | Carrier bolt | It used to fix the inner fixing pin to the pipe holder. It is the part that balances the moment generated by the downward movement of the moving pipe support. |
| 16 | Timing shaft | It is used in conjunction with the half bush to angularly adjust the height adjuster pipe support and the moving pipe support. It goes through the pushing hole in the moving pipe support provides the left and right movements for providing locking. As a result of the left and right movements, the rotation movement of the height adjuster pipe support is adjusted. |
| 16.1 | Locking button | It is a specially designed locking button as to go left and right easily through the pushing hole in |
| | | the moving pipe support. It is designed as a round cylinder so that it can be pressed easily by finger on the locking button. |
| 16.2 | Long timing shaft | It is a shaft that moves right and left with the effect of the locking button on the timing shaft, which is inserted into the moving pipe support. |
| 16.3 | Travel slot | It is a special designed slot to provide necessary travel to the timing shaft to go right and left while pressing and depressing it. |
| 16.4 | Short timing shaft | It is a timing shaft that inserted into the height adjuster pipe support and moves from right to left and from left to right with the effect of the locking button. It allows the height adjuster pipe support to rotate when moving from right to left. It allows the height adjuster pipe support to fix when moving from left to right. |
| 16.5 | Centering groove | It is a groove that used to center and direct the spring while pressing and depressing the locking button. |
| 16.6 | Travel shaft | It is a shaft where the two half bushes as a whole are mounted. |
| 17 | Half bush | It is used in conjunction with the timing shaft to angularly adjust and connect the height adjuster pipe support and the moving pipe support. |
| 17.1 | Holding feature | It is the feature that is prevented from sliding out of the place where the height adjuster pipe support and the moving pipe support is inserted. |
| 17.2 | Positioning chamfer | It allows sliding of the height adjuster pipe support and the moving pipe support easily. |
| 17.3 | Threaded hole | It is a hole one half of which is on the moving pipe support and the next half is on the height adjuster pipe support; to fix position of the moving pipe support and direct the height |
| | | adjuster pipe support. There is an important point to note when creating the threaded hole on the half bush. After a cylindrical bush is manufactured, the threads are created in the hole and after this operation the cylindrical bush is cut in half. The reason for this is that the threads are in harmony with each other during the screwing of the relevant setscrew. |
| 17.4 | Half hole | It is a hole where the timing shaft is mounted. |
| 18 | Spring | It is for providing necessary tension force to the timing shaft to keep moving pipe support in locked position. It is the part used between the height adjuster pipe support and the timing shaft controls the angular movement of the timing shaft by turning the step platform. |
| 19 | Height adjuster pipe support | It is the part that fixed with the setscrew on the half bush. As a result of the left and right movements of the timing shaft, its rotation movement is adjusted. |
| 19.1 | Pushing hole | It is a hole made for easy pushing of the locking button of the timing shaft. |
| 19.2 | Fixing hole | It is a hole that used to fix the position of the height adjuster pipe support. |
| 19.3 | Sliding cutter shaft | It is attached to the timing shaft and directs the right-left movement of the timing shaft. |
| 19.4 | Inner groove | It is groove that the locking button of the timing shaft is made a right-left movement. |
| 19.5 | Supporting fillet | It is a fillet that used to increase the resistance against incoming loads during rotation. |
| 19.6 | Thin protrusion | It is a protrusion that used to increase the resistance against incoming loads during rotation. |
| 19.7 | Adjusting slot | It is a slot that restricts the rotational movement of the height adjuster pipe support and prevents it from moving out. |
| 19.8 | Rotating cutter shaft | It is a cutter shaft that allows the rotation of the height adjuster pipe support when the timing shaft in the height adjuster pipe support moves from right to left and prevents the rotation of the height adjuster pipe support when it moves from left to right. |
| 19.9 | Centering groove | It is a groove that used to center and direct the spring while pressing and depressing the locking button of the timing shaft. |
| 19.10 | Inner groove | It is groove where the two half bush as a whole is mounted. |
| 19.11 | Inner groove | It is groove where the two half bush as a whole is mounted. |
| 20 | Setscrew | It is the part that prevents from leaving the place where the height adjuster pipe support and the moving pipe support is inserted. Thanks to fixing the threaded hole in the half bush, the rotation of the height adjuster pipe support is adjusted and the moving pipe support is fixed. |
| 21 | Timing shaft | It is used in conjunction with the half bush to angularly adjust the height adjuster pipe support and the pipe adapter. It's a special designed button that goes through the hole in the height adjuster pipe support provides the left and right movements for providing locking. As a result of the left and right movements, the rotation movement of the pipe adapter is adjusted. |
| 21.1 | Side button | It is a specially designed button as to go left and right easily through the pushing hole in the |
| | | height adjuster pipe support. It is designed as a round cylinder so that it can be pressed easily by finger on the locking button. |
| 21.2 | Long timing shaft | It is a shaft that moves right and left with the effect of the locking button on the timing shaft, which is inserted into the height adjuster pipe support. |
| 21.3 | Travel slot | It is a special designed slot to provide necessary travel to the timing shaft to go right and left while pressing and depressing it. |
| 21.4 | Short timing shaft | It is a timing shaft that inserted into the pipe adapter and moves from left to right and from right to left with the effect of the locking button. It allows the pipe adapter to rotate when moving from left to right. It allows the pipe adapter to fix when moving from left to right. |
| 21.5 | Travel shaft | It is a shaft where the two half bushes as a whole are mounted. |
| 22 | Half bush | It is used in conjunction with the timing shaft to angularly adjust and connect the pipe adapter and the height adjuster pipe support. |
| 22.1 | Holding feature | It is the feature that is prevented from sliding out of the place where the height adjuster pipe support and the pipe adapter is inserted. |
| 22.2 | Positioning chamfer | Positioning chamfer allows sliding of the height adjuster pipe support and the pipe adapter easily. |
| 22.3 | Threaded hole | It is a hole one half of which is on the height adjuster pipe support and the next half is on the pipe adapter; to fix position of the height adjuster pipe support and direct the pipe adapter. There is an important point to note when creating the threaded hole on the half bush. After a cylindrical bush is manufactured, |
| | | the threads are created in the hole and after this operation the cylindrical bush is cut in half. The reason for this is that the threads are in harmony with each other during the screwing of the relevant setscrew. |
| 22.4 | Half hole | It is a hole that the timing shaft is mounted. |
| 23 | Spring | It is for providing necessary tension force to the timing shaft to keep the height adjuster pipe support in locked position. It is the part used between the timing shaft and the pipe adapter controls the angular movement of the timing shaft by turning the step platform. |
| 24 | Pipe adapter | It is the part that fixed with the setscrew on the half bush. As a result of the left and right movements of the timing shaft, its rotation movement is adjusted. |
| 24.1 | Sliding slot | It is a special designed slot to control and provide necessary travel to locking button to go up and down while pressing and depressing it. It is positioned on the outer cylindrical surface of the pipe adapter and its function is to control the locking button pass through inside. |
| 24.2 | Adjusting slot | It is a groove that restricts the rotational movement of the pipe adapter and prevents it from moving out. |
| 24.3 | Directing protrusion | It is a protrusion that used for the linear guided pipe receiver not to turn on the pipe adapter. |
| 24.4 | Fixing hole | It is a hole that used to fix the position of the button positioner. |
| 24.5 | Inner groove | It is a groove in which the button positioner, the locking button and the button positioner spring are positioned in the pipe adapter. |
| 24.6 | Rotating cutter shaft | It is a cutter shaft that allows the rotation of the pipe adapter when the timing shaft in the pipe |
| | | adapter moves from left to right and prevents the rotation of the timing shaft when it moves from right to left. |
| 24.7 | Inner groove | It is a groove in which the spring is mounted. |
| 25 | Setscrew | It is the part that is prevented from leaving the place where the height adjuster pipe support and the pipe adapter is inserted. Thanks to fixing the threaded hole in the half bush, the rotation of the pipe adapter is adjusted and the height adjuster pipe support is fixed. |
| 26 | Button positioner | It controls the up-down movement of the locking button thanks to the cylindrical element on it. It is fixed the pipe adapter with the setscrew. |
| 26.1 | Controlling protrusion | It is a protrusion that is created for the connection of the fixing setscrew. |
| 26.2 | Inner threaded hole | It is a threaded hole that used to fix the button positioner in the pipe adapter. |
| 26.3 | Combining chamfer | It is a chamfer that enables the joining of separate elements made by welding. As a result, it provides a smooth clean edge to the controlling protrusion. |
| 26.4 | Supporting chamfer | It is a chamfer that enables the joining of the separate button positioner elements made by welding. As a result, it provides a smooth clean edge to the inner protrusion. |
| 26.5 | Inner protrusion | It is a protrusion that designed for the locking button going through the locking slot in the linear guided pipe receiver. |
| 26.6 | Left thin cover | It is a cover that allows the button positioner to fit into the pipe adapter. |
| 26.7 | Right thin cover | It is a cover that allows the button positioner to fit into the pipe adapter. |
| 26.8 | Outer chamfer | It is made to prevent the user from harms of sharp edges during installation. |
| 27 | Button positioner spring | It is the part used between the locking button and the button positioner. It is for providing necessary tension force to the locking button to keep the linear guided step pipe receiver in locked position. |
| 28 | Locking button | It is a special designed button that goes through the sliding slot in the pipe adapter provides the up and down movements for providing locking. As a result of the up and down movements, the right and left directions of the linear guided pipe receiver are adjusted. Its function is to control the linear guided pipe receiver pass through inside. |
| 28.1 | Locking protrusion | It is a specially designed protrusion as to go through the sliding slot in the linear guided pipe receiver that provides left and right movements. |
| 28.2 | Sliding hole | It is a hole that allows centering the locking button moving up and down. |
| 28.3 | Centering protrusion | It is a protrusion that allows centering the locking button moving up and down. |
| 28.4 | Combining chamfer | It is a chamfer that enables the joining of separate elements made by welding. As a result, it provides a smooth clean edge to the centering protrusion. |
| 29 | Fixing setscrew | It is the part used to fix the button positioner to the pipe adapter. It ensures that the locking button, the button positioner and the button positioner spring remain constant in place while operating. |
| 30 | Linear guided pipe receiver | It controls the right and left movements of the step platform to which the lower and the upper linear guide rail are connected. It is the part that is attached to the adjustable handle that compresses the upper linear guide rail. |
| 30.1 | Locking slot | It is a slot that controls the locking button pass through inside. |
| 30.2 | Sliding slot | It is a slot that located outside the directing protrusion of the pipe adapter and controls the linear movement of the linear guided pipe receiver. |
| 30.3 | Side protrusion | It is the protrusion that used to guide and stabilize the movements of the lower and the upper linear guide rails. |
| 30.4 | Supporting protrusion | It is the protrusion that helps to fix by tightening the lower and the upper linear guide rail with the adjustable handle. |
| 30.5 | Threaded hole | It is a threaded hole that allows the locking system mounted via the adjustable handle. It prevents the vibrations that occur on the lower and the upper linear guide rails compressing it. |
| 30.6 | Front groove | It is a groove in which connection the bolts of the step platform are inserted during the forward and the backward movement of the linear guided pipe receiver. |
| 30.7 | Back groove | It is a groove in which connection the bolts of the step platform are inserted during the forward and the backward movement of the linear guided pipe receiver. |
| 30.8 | Outer fillet | It is made to prevent the user during the rotation of the adjustable handle. |
| 30.9 | Outer chamfer | It is made to prevent the user from harms of sharp edges. |
| 30.10 | Outer fillet | It is made to prevent the user from harms of sharp edges. |
| 31 | Pull handle | It is a special designed handle that provide the up and down movements for providing locking movement as to go through the controller hole left- right of the lower linear guide rail in the |
| | | adjustable handle. It is fitted with the spring and the special nut inside of the adjustable handle. |
| 31.1 | Threaded protrusion | It is a threaded protrusion that prevents the special nut from coming out of its place. |
| 32 | Adjustable handle | It keeps together the pull handle, the spring and the special nut that work in relation to each other. It is the part that attached to the linear guided pipe receiver compress the lower linear guide rail. |
| 32.1 | Threaded protrusion | It is a threaded protrusion for fixing the movement of the step platform forward and backward. It allows the locking system to be fixed to the linear guided pipe receiver. |
| 32.2 | Adjusting groove | It is a groove that used to easily tighten the lower linear guide rail by hand. |
| 32.3 | Controller hole | It is a hole that allows the slip movement of the pull handle. |
| 32.4 | inner fillet | It is a fillet that made to prevent the interference with the adjustable handle during the up and down movement of the pull handle. |
| 32.5 | inner groove | It is a groove in which the spring is placed and the movement of the pull handle is kept lower control. |
| 33 | Spring | It is for providing necessary tension force to special nut to keep the lower linear guide rail in locked position. It is the part used between the adjustable handle and the special nut control the linear movement of the pull handle. |
| 34 | Special nut | It is the part that prevents the spring from coming out of the adjustable handle by attaching it on the pull handle. It is constantly subjected to tension force. It is a special designed nut that goes through the hole in the lower linear guide rail provides the up and down |
| | | movements for providing locking. As a result of the up and down movements, the front and back directions of the lower and the upper linear guide rail are adjusted. |
| 34.1 | Threaded hole | It is a threaded hole that allows it to be secured onto the pull handle. |
| 34.2 | Rotating hole | It is a hole that can be easily rotated and tightened after it is attached to the pull handle. |
| 35 | Lower linear guide rail | It has chamfered holes to center the ball-bearings on it. It prevents the ball bearing from coming out of its place and guides the linear movement of the linear guided pipe receiver. |
| 35.1 | Stopping hole | It's a hole that positioned on the lower linear guide rail provides locking by allowing the special nut pass through inside. |
| 35.2 | Fixing protrusion | It's a protrusion that designed to support between the lower linear guide rail and the upper linear guide rail when it is connected with bolt on the step platform. |
| 35.3 | Chamfered hole | It's a chamfered hole that prevents the ball-bearings from coming out of their place. |
| 35.4 | Chamfered hole | **It** is a hole used to fix using the bolt. |
| 35.5 | Fixing groove | It's a grove that positioned on the lower linear guide rail provides locking by allowing the special nut pass through inside. |
| 35.6 | Inner chamfered hole | **It** is a chamfered hole used to fix using the bolt. |
| 35.7 | Outer chamfer | **It** is made to prevent the user from harms of sharp edges. |
| 35.8 | Outer fillet | **It** is made to prevent the user from harms of sharp edges. |
| 36 | Ball-bearing | **It** is specially used as to prevent the friction created by the linear movement that occurs between the linear guided pipe receiver and the lower linear guide rail. |
| 37 | Upper linear guide rail | It is the part that prevents the ball bearing from coming out of its place. It guides the linear movement of the linear guided pipe receiver. |
| 37.1 | Inner hole | It is a hole used to fix using the bolt. |
| 37.2 | Outer chamfer | It is made to prevent the user from harms of sharp edges. |
| 37.3 | Outer fillet | It is made to prevent the user from harms of sharp edges. |
| 38 | Step platform | It is the part that enables access to the rear of the vehicle moves from left to right and bottom to top. |
| 39 | Bolt | It is a part that allows the upper and the lower linear guide rail to be fixed to the step platform. |
| 40 | Fixing with cable tie | It is the part that connected the wiring harness to the step platform. |
| 41 | Parking sensor | It is designed to alert the driver to obstacles while parking. |
| 42 | Wiring harness | It is used for the parking sensor connections. |
| 43 | Reflective tape | It is only as effective as step platform is visible and is positioned horizontally on the step platform side surface, as close to the edge as possible. |

## Claims

1. A step assembly for removably securing a support platform to a vehicle, comprising:
- a support system (SS1) mountable to a trailer hitch or tow bar or tow hitch;
- a support platform (38) connected with said support system via a plurality of positioning mechanisms (SP1A, SP1B; SP2; SP3),
wherein the plurality of positioning mechanisms comprises:
- a first positioning mechanism (SP1A, SP1B) configured for selectively securing and adjusting a height position (H) of the support platform (38) relative to the vehicle; and
- a second positioning mechanism (SP2) configured for selectively securing and adjusting a transverse position (T) of the support platform (38) relative to the vehicle, and
- a third positioning mechanism (SP3) configured for selectively securing and adjusting a longitudinal position (L) of the support platform (38) relative to the vehicle, wherein the first positioning mechanism itself comprises two subsystems, an up-down displacement mechanism with head (SP1A) and an up-down displacement mechanism with buttons (SP1B)
**characterised in, that**
the up-down displacement mechanism with buttons (SP1B) comprises a height adjuster pipe support (19), springs (18,23), half bushes (17,22), setscrews (20,25), a timing shaft (16,21) and a pipe adapter (24).

2. The step assembly according to claim 1,
wherein the support system (SS1) comprises a mounting bracket (1) with at least two holes for allowing passage of bolts.

3. The step assembly according to any of the previous claims,
wherein the first positioning mechanism (SP1A, SP1B) is configured to secure the support platform (38) at a height position selected from a limited group of discrete height positions.

4. The step assembly according to any of the previous claims,
wherein the second positioning mechanism (SP2) is configured to secure the support platform (38) at a lateral or transverse position selected from a limited group of discrete transverse positions.

5. The step assembly according to any of the previous claims,
wherein the third positioning mechanism (SP3) is configured to secure the support platform (38) at a longitudinal position selected from a limited group of discrete longitudinal positions.

6. The step assembly according to any of the previous claims,
wherein the third positioning mechanism (SP3) comprises a pair of two spaced-apart guiding mechanisms, each guiding mechanism comprising a lower guide rail (35) and an upper guide rail (37) slidably arranged thereto.

7. A kit of parts of the step assembly according to any of the previous claims for assembling the step assembly according to any of the previous claims, comprising:
- the support system (SS1);
- the support platform (38);
- the first positioning mechanism (SP1A, SP1B), the second positioning mechanism (SP2), and the third positioning mechanism (SP3).

## Patentansprüche

1. Stufenbaugruppe zum entfernbaren Befestigen einer Trägerplattform an einem Fahrzeug, umfassend:
- ein Trägersystem (SS1), das an einer Anhängerkupplung oder Abschleppstange oder Anhängekupplung montierbar ist;
- eine Trägerplattform (38), die über mehrere Positionierungsmechanismen (SP1A, SP1B; SP2; SP3) mit dem Trägersystem verbunden ist,
wobei die mehreren Positionierungsmechanismen Folgendes umfassen:
- einen ersten Positionierungsmechanismus (SP1A, SP1B), der zum selektiven Sichern und Verstellen einer Höhenposition (H) der Trägerplattform (38) relativ zu dem Fahrzeug ausgelegt ist; und
- einen zweiten Positionierungsmechanismus (SP2), der zum selektiven Sichern und Verstellen einer transversalen Position (T) der Trägerplattform (38) relativ zu dem Fahrzeug ausgelegt ist, und
- einen dritten Positionierungsmechanismus (SP3), der zum selektiven Sichern und Verstellen einer Längsposition (L) der Trägerplattform (38) relativ zu dem Fahrzeug ausgelegt ist, wobei der erste Positionierungsmechanismus selbst zwei Teilsysteme umfasst, einen Aufwärts-Abwärts-Verschiebemechanismus mit Kopf (SP1A) und einen Aufwärts-Abwärts-Verschiebemechanismus mit Tasten (SP1B)
**dadurch gekennzeichnet, dass**
der Aufwärts-Abwärts-Verschiebemechanismus mit Tasten (SP1B) einen Höhenverstellungsrohrträger (19), Federn (18, 23), Halbbuchsen (17, 22), Stellschrauben (20, 25), eine Steuerwelle (16, 21) und einen Rohradapter (24) umfasst.

2. Stufenbaugruppe nach Anspruch 1,
wobei das Trägersystem (SS1) eine Montagehalterung (1) mit mindestens zwei Löchern zum Ermöglichen eines Durchgangs von Schrauben umfasst.

3. Stufenbaugruppe nach einem der vorhergehenden Ansprüche,
wobei der erste Positionierungsmechanismus (SP1A, SP1B) dazu ausgelegt ist, die Trägerplattform (38) an einer Höhenposition zu sichern, die aus einer begrenzten Gruppe diskreter Höhenpositionen ausgewählt ist.

4. Stufenbaugruppe nach einem der vorhergehenden Ansprüche,
wobei der zweite Positionierungsmechanismus (SP2) dazu ausgelegt ist, die Trägerplattform (38) an einer lateralen oder transversalen Position zu sichern, die aus einer begrenzten Gruppe diskreter transversaler Positionen ausgewählt ist.

5. Stufenbaugruppe nach einem der vorhergehenden Ansprüche,
wobei der dritte Positionierungsmechanismus (SP3) dazu ausgelegt ist, die Trägerplattform (38) an einer Längsposition zu sichern, die aus einer begrenzten Gruppe diskreter Längspositionen ausgewählt ist.

6. Stufenbaugruppe nach einem der vorhergehenden Ansprüche,
wobei der dritte Positionierungsmechanismus (SP3) ein Paar von zwei beabstandeten Führungsmechanismen umfasst, wobei jeder Führungsmechanismus eine untere Führungsschiene (35) und eine verschiebbar daran angeordnete obere Führungsschiene (37) umfasst.

7. Satz von Teilen der Stufenbaugruppe nach einem der vorhergehenden Ansprüche zum Zusammenbauen der Stufenbaugruppe nach einem der vorhergehenden Ansprüche, umfassend:
- das Trägersystem (SS1);
- die Trägerplattform (38);
- den ersten Positionierungsmechanismus (SP1A, SP1B), den zweiten Positionierungsmechanismus (SP2) und den dritten Positionierungsmechanismus (SP3).

## Revendications

1. Ensemble marchepied pour fixer de manière amovible une plate-forme de support à un véhicule, comprenant :
- un système de support (SS1) pouvant être monté sur un attelage de remorque, une barre de remorquage ou un attelage de remorquage ;
- une plate-forme de support (38) reliée audit système de support par l'intermédiaire d'une pluralité de mécanismes de positionnement (SP1A, SP1B ; SP2 ; SP3), la pluralité de mécanismes de positionnement comprenant :
- un premier mécanisme de positionnement (SP1A, SP1B) conçu pour fixer et ajuster sélectivement une position en hauteur (H) de la plate-forme de support (38) par rapport au véhicule ; et
- un deuxième mécanisme de positionnement (SP2) conçu pour fixer et ajuster sélectivement une position transversale (T) de la plate-forme de support (38) par rapport au véhicule, et
- un troisième mécanisme de positionnement (SP3) conçu pour fixer et ajuster sélectivement une position longitudinale (L) de la plate-forme de support (38) par rapport au véhicule, le premier mécanisme de positionnement comprenant lui-même deux sous-systèmes, un mécanisme de déplacement de haut en bas avec tête (SP1A) et un mécanisme de déplacement de haut en bas avec boutons (SP1B)
**caractérisé en ce que**
le mécanisme de déplacement de haut en bas avec boutons (SP1B) comprend un support à tube de réglage de hauteur (19), des ressorts (18, 23), des demi-bagues (17, 22), des vis de réglage (20, 25), un arbre de synchronisation (16, 21) et un adaptateur de tube (24).

2. Ensemble marchepied selon la revendication 1,
le système de support (SS1) comprenant un support de montage (1) comportant au moins deux trous pour permettre le passage de boulons.

3. Ensemble marchepied selon l'une quelconque des revendications précédentes,
le premier mécanisme de positionnement (SP1A, SP1B) étant conçu pour fixer la plate-forme de support (38) à une position de hauteur choisie dans un groupe limité de positions de hauteur discrètes.

4. Ensemble marchepied selon l'une quelconque des revendications précédentes,
le second mécanisme de positionnement (SP2) étant conçu pour fixer la plate-forme de support (38) à une position latérale ou transversale choisie dans un groupe limité de positions transversales discrètes.

5. Ensemble marchepied selon l'une quelconque des revendications précédentes,
le troisième mécanisme de positionnement (SP3) étant conçu pour fixer la plate-forme de support (38) à une position longitudinale choisie dans un groupe limité de positions longitudinales discrètes.

6. Ensemble marchepied selon l'une quelconque des revendications précédentes,
le troisième mécanisme de positionnement (SP3) comprenant une paire de deux mécanismes de guidage espacés, chaque mécanisme de guidage comprenant un rail de guidage inférieur (35) et un rail de guidage supérieur (37) disposé de manière coulissante sur celui-ci.

7. Kit de pièces de l'ensemble marchepied selon l'une quelconque des revendications précédentes pour l'assemblage de l'ensemble marchepied selon l'une quelconque des revendications précédentes, comprenant :
- le système de support (SS1) ;
- la plate-forme de support (38) ;
- le premier mécanisme de positionnement (SP1A, SP1B), le deuxième mécanisme de positionnement (SP2) et le troisième mécanisme de positionnement (SP3).
